(19) Europäisches Patentamt / European Patent Office / Office européen des brevets

(11) **EP 4 644 762 B1**

(12) **EUROPÄISCHE PATENTSCHRIFT**

(45) Veröffentlichungstag und Bekanntmachung des Hinweises auf die Patenterteilung:
**10.06.2026   Patentblatt 2026/24**

(21) Anmeldenummer: **24173970.5**

(22) Anmeldetag: **02.05.2024**

(51) Internationale Patentklassifikation (IPC):
***F17C 7/04*** *(2006.01)*

(52) Gemeinsame Patentklassifikation (CPC):
**F17C 7/04;** F17C 2201/0109; F17C 2201/035;
F17C 2201/056; F17C 2203/0391; F17C 2203/0629;
F17C 2205/0338; F17C 2221/012; F17C 2223/0161;
F17C 2223/033; F17C 2223/035; F17C 2227/0107;
F17C 2227/0306; F17C 2227/0323;
F17C 2227/0369;                              (Forts.)

(54) **WASSERSTOFFSPEICHERSYSTEM UND VERFAHREN ZUR REGELUNG EINER ENTNAHME VON KRYOGENEM WASSERSTOFF AUS EINEM KRYODRUCKTANK**

HYDROGEN STORAGE SYSTEM AND METHOD FOR CONTROLLING A CRYOGENIC HYDROGEN WITHDRAWAL FROM A CRYOGENIC PRESSURE TANK

SYSTÈME DE STOCKAGE D'HYDROGÈNE ET PROCÉDÉ DE RÉGULATION D'UN PRÉLÈVEMENT D'HYDROGÈNE CRYOGÉNIQUE D'UN RÉSERVOIR DE CRYO-PRESSION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**05.11.2025   Patentblatt 2025/45**

(73) Patentinhaber: **Cryomotive GmbH**
**85630 Grasbrunn (DE)**

(72) Erfinder:
• **Franke, Torsten**
  **81477 München (DE)**
• **Gromotka, Jeremias**
  **80797 München (DE)**
• **Brunner, Tobias Christoph**
  **85630 Grasbrunn (DE)**

(74) Vertreter: **Pearl Cohen EU**
**Nibelungenstraße 84**
**80639 München (DE)**

(56) Entgegenhaltungen:
WO-A1-2017/041963        WO-A1-2022/150474
DE-A1- 102007 057 978

(52) Gemeinsame Patentklassifikation (CPC): (Forts.)
F17C 2227/0393; F17C 2227/04; F17C 2250/032;
F17C 2250/043; F17C 2250/0439; F17C 2250/0473;
F17C 2250/0478; F17C 2250/0482;
F17C 2250/0626; F17C 2250/0631;
F17C 2250/0636; F17C 2260/02; F17C 2260/021;
F17C 2260/037; F17C 2265/066; F17C 2270/0168;
F17C 2270/0189; Y02E 60/32

## Beschreibung

Bereitgestellt werden ein Verfahren zur Regelung einer Entnahme von kryogenem Wasserstoff aus einem Kryodrucktank, eine Steuereinheit zur Regelung einer Entnahme von in einem Kryodrucktank gespeichertem kryogenem Wasserstoff aus dem Kryodrucktank, ein Wasserstoffspeichersystem zur Speicherung von kryogenem Wasserstoff, ein Kraftfahrzeug und ein Verfahren zur Parametrisierung einer Regelung einer Entnahme von kryogenem Wasserstoff aus einem Kryodrucktank. Die Ausführungsformen liegen somit insbesondere auf dem Gebiet der Speicherung von kryogenem Wasserstoff und der Entnahme des Wasserstoffs zur Versorgung eines oder mehrerer Verbraucher.

Im Stand der Technik sind Verfahren und Kryodrucktanks zur Speicherung von kryo-komprimiertem Wasserstoff (CcH2) bekannt, welche für den Einsatz in leichten Kraftfahrzeugen, wie Personenkraftwagen, ausgelegt sind. Wenngleich die Funktionalität dieser Technologie von BMW in mehreren Prototypen des Modells 5GT demonstriert wurde, erfolgt bisweilen noch keine kommerzielle Anwendung. Dabei werden einzelne Kryodrucktanks verwendet, welche eine Menge an Wasserstoff von etwa 7 kg speichern können. Derartige Kryodrucktanks und Verfahren zu deren Betrieb sind etwa in der WO 2009/071208 A1, der WO 2013/143773 A1, der WO 2013/143774 A1 und der WO 2022/150474 A1 beschrieben. Eine Herausforderung bei der Nutzung von Kryodrucktanks insbesondere in leichten Kraftfahrzeugen, wie insbesondere in Personenkraftwagen, sind die bei solchen Kraftfahrzeugen oftmals langen Standzeiten, welche mehrere Stunden, mehrere Tage oder gar mehrere Wochen betragen können. Während solcher Standzeiten führt ein Wärmeeintrag in den gespeicherten Wasserstoff zu einer stetigen Erhöhung des Drucks. Um ein Überschreiten des zulässigen Maximaldrucks des Kryodrucktanks zu vermeiden, ist ein geregeltes Abblasen eines Teils des gespeicherten Wasserstoffs erforderlich, welche mit anderen Problemen einhergehen kann.

Um einen möglichst großen Puffer bis zum Erreichen des maximal zulässigen Drucks des Wasserstoffs auch bei langen Standzeiten zu erreichen, folgt im Regelbetrieb eine Entnahme des Wasserstoffs aus Kryodrucktanks herkömmlicherweise derart, dass durch Entnahme von Wasserstoff aus einem (nahezu) vollen Kryodrucktank der Druck möglichst rasch abgesenkt wird, um einen möglichst großen Abstand zum maximal zulässigen Druck des Kryodrucktanks zu erreichen, und auf diese Weise auch lange Standzeiten absolvieren zu können, ohne den maximal zulässigen Betriebsdruck zu erreichen. Das rasche Absenken des Drucks bei der Entnahme von Wasserstoff aus dem (nahezu) vollen Kryodrucktank kann jedoch dazu führen, dass sich der thermodynamische Zustand des im Kryodrucktank gespeicherten Wasserstoffs der Zweiphasengrenze nähert oder diese gar erreicht, ab welcher zumindest ein Teil des gespeicherten Wasserstoffs in die flüssige Phase übergeht und entsprechend zunächst nicht mehr als gasförmiger, kryo-komprimierter Wasserstoff zur Verfügung steht. Dadurch kann die Entnahme des Wasserstoffs wegen des zu niedrigen Tankdrucks, sowie die Bestimmung der verbleibenden Restmenge (Speicherkapazität) im Behälter durch die in der Nähe zur Zweiphasengrenze nicht ausreichend genau mögliche Temperaturmessung erschwert werden, im Zweiphasengebiet durch die Kopplung von Temperatur und Druck ohne zusätzliche Füllstandssonde im Tank sogar unmöglich werden. Eine Entmischung der Phasen des im Kryodrucktanks gespeicherten Wasserstoffs kann somit eine Ermittlung des verbleibenden Tankinhalts lediglich über Temperatur und Druck unmöglich machen. Zudem kann die Wärmezufuhr bei zunehmend leerem Tank erheblich erschwert werden, sodass unter Umständen eine Weiterfahrt trotz einer ausreichend vorhandenen Restmenge an Wasserstoff im Kryodrucktank wegen eines zu geringen Tankdrucks nicht mehr möglich ist.

Neben der Verwendung von gespeichertem Wasserstoff in einem Kryodrucktank zur Versorgung eines Verbrauchers mit Energie beschreibt die WO 2013/143773 A1 mit Bezug zu Figur 4 auch ein Einleiten von Abwärme des Verbrauchers in den Kryodrucktank, um bei Bedarf den Verbraucher zu kühlen.

DE 10 2007 057978 A1 offenbart ein System mit einem Kryobehälter und einem einstückigen Druckmanagementsystem.

Die Messung des Tankinhalts eines Kryodrucktanks erfolgt herkömmlicherweise über die Ermittlung der Temperatur und des Drucks des im Kryodrucktank gespeicherten Wasserstoffs. Daraus ergibt sich für ein klassisches Betriebsverfahren, wie es etwa aus dem Stand der Technik bekannt ist (z. B. WO 2009/071208 A1), die Herausforderung, dass schon geringe Abweichungen bei der Messung der Tankinnentemperatur zu erheblichen Fehlern bei der Bestimmung der verbleibenden Wasserstoffrestdichte im Tank führen können. Derartige Messfehler sind bauartbedingt kaum zu vermeiden, da eine störungsfreie Temperaturmessung im Wasserstoffvolumen technisch nicht ohne weiteres möglich ist. Jede Form von Befestigung, Sonde und/oder auch nur ein zum Sensor führendes Kabel würden als Wärmebrücke die Messung verfälschen, da diese eine Zufuhr von Wärme in den im Kryodrucktank gespeicherten Wasserstoff begünstigen würden. Üblicherweise wird die Temperaturmessung daher an einer Aluminiumauskleidung eines Innentanks des Kryodrucktanks, welcher auch als Liner bezeichnet wird, vorgenommen. Die dort, an der Tankwandung, ermittelte Temperatur kann allerdings von der tatsächlichen Temperatur des im Kryodrucktank gespeicherten Wasserstoffs abweichen. Wie beispielsweise Figur 2 der WO 2009/071208 A1 zeigt, kann bereits eine Abweichung von ±1°K entlang weiter Bereiche beispielsweise der 15bar (1,5MPa) - Isobarenlinie zu einer erheblichen Fehleinschätzung der verbleibenden Restdichte des im Kryodrucktanks gespeicherten Wasserstoffs führen. Im besten Fall würde eine derartige Abweichung lediglich die mit dem Wasserstoff verbleibende, restliche Reichweite zu gering angeben und einen eigentlich unnötigen Tankstopp erforderlich machen. Im schlimmsten Fall würde ein Fahrzeug, welches mit dem im Kryodrucktank gespeicherten Wasserstoff angetrieben wird, mit leerem Tank liegenbleiben. Bei dem Überschreiten der Sättigungsgrenze könnte der Wasserstoff sogar kondensieren und zumindest teilweise in den flüssigen Zustand übergehen, was einen schlagartigen Druckverlust im Tank zur Folge hätte, und eine Bestimmung des restlichen Tankinhalts auf Basis von Temperatur und Druck unmöglich machen würde.

Vor dem Hintergrund dieses Standes der Technik besteht die Aufgabe der vorliegenden Offenbarung darin, ein verbessertes Verfahren zum Betrieb eines Kryodrucktanks anzugeben, welches geeignet ist, den Stand der Technik zu erweitern. Eine konkrete Ausgestaltung der Offenbarung kann die Aufgabe lösen, die Gefahr einer Verflüssigung des Wasserstoffs im Kryodrucktank (CcH2 CRYOGAS Tank) zuverlässig zu reduzieren, optional die Bestimmung der Kapazität von Wasserstoff im Tank durch einfache Temperatur- und Druckmessung zu verbessern, sowie optional die Bereitstellung von ausreichendem Tankdruck auch bei sich leerendem Tank sicherzustellen.

Es liegt die Aufgabe zugrunde, ein Verfahren zur Regelung einer Entnahme von kryogenem Wasserstoff aus einem Kryodrucktank derart zu verbessern, dass die dem Stand der Technik anhaftenden Nachteile zumindest teilweise vermieden werden, und der Stand der Technik bereichert wird. Optional kann zudem die Aufgabe zugrunde liegen, die Zuverlässigkeit und Flexibilität bei der Entnahme von kryogenem Wasserstoff aus einem Kryodrucktank zu verbessern.

Die Aufgabe wird gelöst durch ein Verfahren zur Regelung einer Entnahme von kryogenem Wasserstoff aus einem Kryodrucktank, eine Steuereinheit zur Regelung einer Entnahme von in einem Kryodrucktank gespeichertem kryogenem Wasserstoff aus dem Kryodrucktank, ein Wasserstoffspeichersystem zur Speicherung von kryogenem Wasserstoff, ein Kraftfahrzeug, ein Verfahren zur Parametrisierung einer Regelung einer Entnahme von kryogenem Wasserstoff aus einem Kryodrucktank, und ein Verfahren zur Regelung einer Entnahme von kryogenem Wasserstoff aus einem Kryodrucktank mit den Merkmalen der jeweiligen unabhängigen Ansprüche. Optionale Ausgestaltungen sind in den Unteransprüchen und in der Beschreibung angegeben.

Bereitgestellt wird ein Verfahren zur Regelung einer Entnahme von kryogenem Wasserstoff aus einem Kryodrucktank. Das Verfahren umfasst ein Regeln der Entnahme des Wasserstoffs aus dem Kryodrucktank in einer ersten Phase derart, dass die Entnahme im Wesentlichen adiabatisch erfolgt. Zudem umfasst das Verfahren ein Regeln der Entnahme des Wasserstoffs aus dem Kryodrucktank in einer zweiten Phase derart, dass die Entnahme unter aktiver Zufuhr von Wärme in den im Kryodrucktank gespeicherten Wasserstoff erfolgt. Das Verfahren umfasst ferner ein Ermitteln eines Umschaltdruckniveaus, welches von einer einzuhaltenden Mindestmessgenauigkeit für eine Mengenmessung des im Kryodrucktank gespeicherten Wasserstoffs abhängt, sowie ein Festlegen des Umschaltdruckniveaus als Schwellwert der Regelung für einen Übergang von der ersten Phase zur zweiten Phase.

Ferner wird eine Steuereinheit zur Regelung einer Entnahme von in einem Kryodrucktank gespeichertem kryogenem Wasserstoff aus dem Kryodrucktank bereitgestellt, wobei die Steuereinheit dazu eingerichtet ist, ein offenbarungsgemäßes Verfahren auszuführen.

Zudem wird ein Wasserstoffspeichersystem zur Speicherung von kryogenem Wasserstoff bereitgestellt, das einen Kryodrucktank umfasst, welcher dazu ausgelegt ist, kryogenen Wasserstoff bei einem überkritischen Druck zu speichern. Zudem umfasst das Wasserstoffspeichersystem ein Wärmezufuhrelement, welches dazu ausgelegt ist, dem im Kryodrucktank gespeicherten Wasserstoff Wärme zuzuführen. Ferner umfasst das Wasserstoffspeichersystem eine Steuereinheit, welche dazu eingerichtet ist, die folgenden Schritte durchzuführen: (i) Regeln einer Entnahme des Wasserstoffs aus dem Kryodrucktank in einer ersten Phase derart, dass die Entnahme im Wesentlichen adiabatisch erfolgt; und (ii) Regeln der Entnahme des Wasserstoffs aus dem Kryodrucktank in einer zweiten Phase derart, dass die Entnahme unter aktiver Zufuhr von Wärme in den im Kryodrucktank gespeicherten Wasserstoff mittels des Wärmezufuhrelements erfolgt. Die Steuereinheit ist ferner dazu eingerichtet, die folgenden Schritte durchzuführen: (iii) Ermitteln eines Umschaltdruckniveaus, welches von einer einzuhaltenden Mindestmessgenauigkeit für eine Mengenmessung des im Kryodrucktank gespeicherten Wasserstoffs abhängt; und (iv) Festlegen des Umschaltdruckniveaus als Schwellwert der Regelung für einen Übergang von der ersten Phase zur zweiten Phase.

Darüber hinaus wird ein Kraftfahrzeug bereitstellt, das einen Wasserstoff-Verbrennungsmotor und/oder eine oder mehrere Brennstoffzellen aufweist, sowie ein offenbarungsgemäßes Wasserstoffspeichersystem. Das Kraftfahrzeug ist dazu ausgelegt, kryogenen Wasserstoff zu speichern und den Wasserstoff Verbrennungsmotor und/oder die Brennstoffzelle(n) mit dem Wasserstoff aus dem Wasserstoffspeichersystem zu versorgen.

Zudem wird ein Verfahren zur Parametrisierung einer Regelung einer Entnahme von kryogenem Wasserstoff aus einem Kryodrucktank bereitgestellt. Das Verfahren umfasst ein Ermitteln einer vorgegebenen Mindestmessgenauigkeit für eine Mengenmessung des im Kryodrucktank gespeicherten Wasserstoffs und ein Bestimmen eines für das Erreichen der Mindestmessgenauigkeit für die Mengenmessung erforderlichen Mindestdrucks des im Kryodrucktank gespeicherten Wasserstoffs in Abhängigkeit von einem vorgegebenen Temperaturmessfehler, welcher einer Temperaturmessung des gespeicherten Wasserstoffs anhaftet. Zudem umfasst das Verfahren ein Festlegen eines Umschaltdruckniveaus in Abhängigkeit von dem bestimmten Mindestdruck, und ein Bereitstellen des Umschaltdruckniveaus als Schwellwert für eine Regelung der Entnahme des Wasserstoffs aus dem Kryodrucktank für einen Übergang von einer ersten Phase mit einer im Wesentlichen adiabatischen Entnahme des Wasserstoffs aus dem Kryodrucktank zu einer zweiten Phase mit einer Entnahme des Wasserstoffs aus dem Kryodrucktank unter aktiver Zufuhr von Wärme in den im Kryodrucktank gespeicherten Wasserstoff.

Außerdem wird ein Verfahren zur Regelung einer Entnahme von kryogenem Wasserstoff aus einem Kryodrucktank bereitgestellt. Das Verfahren umfasst ein Regeln der Entnahme des Wasserstoffs aus dem Kryodrucktank in einer ersten Phase derart, dass die Entnahme im Wesentlichen adiabatisch erfolgt, und ein Regeln der Entnahme des Wasserstoffs aus dem Kryodrucktank in einer zweiten Phase derart, dass die Entnahme unter aktiver Zufuhr von Wärme in den im Kryodrucktank gespeicherten Wasserstoff erfogt. Das Verfahren umfasst ferner ein Erhalten und/oder Bereitstellen eines gemäß einem offenbarungsgemäßen Verfahren bereitgestellten Umschaltdruckniveaus, und ein Festlegen des Umschaltdruckniveaus als Schwellwert der Regelung für einen Übergang von der ersten Phase zur zweiten Phase.

Kryogener Wasserstoff ist dabei tiefkalter Wasserstoff. Die Temperatur des kryogenen Wasserstoffs kann dabei 200 K oder weniger betragen. Insbesondere kann die Ausgabe von kryogenem Wasserstoff die Ausgabe von flüssigem Wasserstoff und/oder gasförmigen Wasserstoff unter hohem Druck und/oder kryo-komprimiertem Wasserstoff (CcH2), gasförmigem Wasserstoff unter Druck zwischen 1 bar und ca. 500 bar bei kryogenen Temperaturen zwischen 30 K und ca. 200 K, umfassen.

Ein Kryodrucktank ist dabei ein Tank, welcher dazu ausgelegt ist, kryogenen bzw. kryo-komprimierten Wasserstoff bei einem überkritischen Druck zu speichern, sodass der Wasserstoff auf kontrollierte Weise zur Versorgung eines oder mehrerer Verbraucher aus dem Kryodrucktank entnehmbar ist. Weitere Merkmale, welche ein Kryodrucktank aufweisen kann, sind beispielsweise in der WO 2013/143773 A1 beschrieben.

Ein Kryodrucktank kann dabei insbesondere ein Tank sein, welcher zur Speicherung von kryo-komprimiertem gasförmigen Wasserstoff unter hohem Druck geeignet und/oder ausgelegt ist. Ein Kryodrucktank kann auch als $CcH_2$ CRYOGAS Tank bezeichnet werden.

Die Dichte und der Druck sind dabei jene Werte, welche der gespeicherte Wasserstoff im vorliegenden Zustand, insbesondere in befülltem Zustand, aufweist. Ein vorbestimmter Mindestdruck kann dabei ein solches Maß für den Druck des Wasserstoffs sein, welches der entnommene Wasserstoff aufweisen muss, um den einen oder die mehreren Verbraucher damit versorgen zu können.

Für die Versorgung einer Brennstoffzelle mit Wasserstoff kann optional ein vorbestimmter Mindestdruck in einem Bereich von 5 bar bis 15 bar erforderlich sein. Für die Versorgung einer Brennkraftmaschine, wie etwa für einen Wasserstoff-Verbrennungsmotor, kann optional ein vorbestimmter Mindestdruck in einem Bereich von 8 bar bis 50 bar erforderlich sein. So kann etwa mindestens eine Brennstoffzelle und/oder mindestens eine Brennkraftmaschine als Verbraucher angeschlossen sein, welche für den korrekten Betrieb eine Zufuhr von Wasserstoff mit einem systembedingten Mindestdruck benötigen. Dieser kann den vorbestimmten Mindestdruck darstellen oder diesen beeinflussen. Sofern zwischen dem Auslass des Wasserstoffs aus dem Kryodrucktank und dem einen oder den mehreren Verbrauchern ein Druckabfall zu erwarten ist, kann der vorbestimmte Mindestdruck für den im Kryodrucktank gespeicherten Wasserstoff von dem systembedingten Mindestdruck des Verbrauches bzw. der Verbraucher und von dem zu erwartenden Druckabfall abhängen. Ein Unterschreiten des vorbestimmten Mindestdrucks durch den in dem Kryodrucktank gespeicherten Wasserstoff kann daher dazu führen, dass der oder die Verbraucher nicht hinreichend mit Wasserstoff versorgt werden können. Dies kann zur Folge haben, dass ein ordnungsgemäßer Betrieb des Verbrauchers nicht mehr möglich ist und/oder der Verbraucher dadurch beschädigt wird, wie in der folgenden Veröffentlichung beispielhaft beschrieben wird.

C.M. Rangel et al.: "Fuel Starvation: Irreversible Degradation Mechanisms in PEM Fuel Cells", WHEC 2010, Essen, Deutschland, Session Title/No. Electrochemistry of PEM Fuel Cells/FC. 1 (4. Juni 2014).

Das Regeln der Wärmezufuhr in den Kryodrucktank dient dabei dazu, den im Kryodrucktank gespeicherten kryogenen Wasserstoff kontrolliert zu erwärmen, so dass er sich ausbreitet, und auf diese Weise der Druck des Wasserstoffs erhöht wird. Mittels der Regelung des Wärmeeintrags kann somit der Druckverlauf des gespeicherten Wasserstoffs im Kryodrucktank beeinflusst werden. Für die Wärmezufuhr kann optional im Kryodrucktank ein Wärmetauscher ausgebildet sein, wie beispielsweise in der WO 2013/143773 A1 beschrieben.

Ein Wärmezufuhrelement kann dabei optional einen Wärmeübertrager bzw. einen Wärmetauscher aufweisen oder als solcher ausgebildet sein. Der Wärmetauscher kann dabei innerhalb des Kryodrucktanks angeordnet sein, um Wärme eines durch den Wärmetauscher strömenden Fluids auf den im Kryodrucktank gespeicherten Wasserstoff zu übertragen.

Das Verfahren zur Regelung einer Entnahme von kryogenem Wasserstoff kann dabei derart ausgestaltet sein, dass eine Entnahmemenge und/oder eine Entnahmemenge pro Zeit, wie etwa ein Strom von entnommenem Wasserstoff geregelt wird. Dies kann optional durch ein Regeln einer Öffnung und/oder eines Schließens eines oder mehrerer Ventile erfolgen, durch welche der zu entnehmende Wasserstoff aus dem Kryodrucktank strömen kann. Das Regeln einer Entnahme von kryogenem Wasserstoff kann optional zusätzlich ein Regeln einer Wärmezufuhr in den gespeicherten Wasserstoff umfassen, um die Temperatur und/oder den Druck des im Kryodrucktank gespeicherten Wasserstoffs in einen vorgegebenen Bereich zu bringen und/oder zu halten. Die Regelung zur Entnahme des kryogenen Wasserstoffs aus dem Kryodrucktank kann dabei einer kontrollierten Entnahme des Wasserstoffs aus dem Kryodrucktank bzw. einer kontrollierten Entleerung des Kryodrucktanks dienen.

Die Phasen der Regelung und/oder der Entnahme des Wasserstoffs können dabei unterschiedliche Zeitabschnitte darstellen, in welchen die Regelung mit abweichenden Regelzielen erfolgt. Die Phasen können zeitlich sequentiell vorgesehen sein. Die Phasen können dabei unmittelbar aufeinander abfolgend ausgebildet sein oder zeitlich voneinander beabstandet ausgebildet sein.

Eine "im Wesentlichen adiabatische" Entnahme bedeutet dabei, dass die Entnahme ohne einen aktiv herbeigeführten Wärmeaustausch des gespeicherten Wasserstoffs mit seiner Umgebung erfolgt. "Im Wesentlichen adiabatisch" ist dabei derart zu verstehen, dass ein vernachlässigbarer und optional ein technisch nicht vermeidbarer Wärmeaustausch erfolgen kann, etwa durch einen Eintrag von Strahlungswärme z.B. durch eine Vakuumisolation, die den Speicherbehälter umgibt. Die im Wesentlichen adiabatische Entnahme kann optional dadurch erfolgen, dass die Regelung während der im Wesentlichen adiabatischen Entnahme ohne aktive Wärmezufuhr in den gespeicherten Wasserstoff erfolgt. Dies kann optional derart erfolgen, dass mittels eines zum Wasserstoffspeichersystem gehörenden Wärmezufuhrelements, welches optional einen Wärmetauscher umfassen kann, während der adiabatischen Entnahme keine Wärme in den gespeicherten Wasserstoff eingebracht wird. Das Regeln der Entnahme des Wasserstoffs aus dem Kryodrucktank in der ersten Phase kann somit derart erfolgen, dass während der ersten Phase keine aktive Zufuhr von Wärme in den im Kryodrucktank gespeicherten Wasserstoff erfolgt.

Im Gegensatz dazu kann während der zweiten Phase, in welcher die Entnahme unter aktiver Zufuhr von Wärme erfolgt, mittels eines zum Wasserstoffspeichersystem gehörenden Wärmezufuhrelements, welches optional einen Wärmetauscher umfassen kann, dem gespeicherten Wasserstoff Wärme zugeführt werden, etwa um die Temperatur und/oder den Druck des gespeicherten Wasserstoffs in einem vorgebebenen Bereich zu halten und/oder in einen vorbestimmten Bereich zu bringen.

Das Umschaltdruckniveau kann dabei einem Druckwert und/oder einem Druckbereich entsprechen, bei Erreichen und/oder Unterschreiten dessen die Regelung von der ersten Phase in die zweite Phase übergehen soll. Mit anderen Worten ausgedrückt kann das Umschaltdruckniveau einen Druck-Schwellwert darstellen, bei welchem ein Umschalten der Regelung von der ersten in die zweite Phase erfolgen soll.

Die Mindestmessgenauigkeit für eine Mengenmessung des im Kryodrucktank gespeicherten Wasserstoffs ist dabei ein Grenzwert, welcher angibt, mit welcher Messgenauigkeit die Mengenmessung des im Kryodrucktank gespeicherten Wasserstoffs möglich sein muss. Die Mengenmessung kann dabei auf einer Messung der Temperatur und des Drucks des im Kryodrucktank gespeicherten Wasserstoffs beruhen, sodass auf den erfassten Messwerten für die Temperatur und den Druck die Menge des gespeicherten Wasserstoffs ermittelt werden kann. Wie eingangs erwähnt kann insbesondere die Messung der Temperatur mit erheblichen Messfehlern behaftet sein, wobei sich in Abhängigkeit vom thermodynamischen Zustand des gespeicherten Wasserstoffs und optional in Abhängigkeit von einem Abstand des thermodynamischen Zustands des Wasserstoffs von der Zweiphasengrenze unterschiedliche Auswirkungen des der Temperaturmessung anhaftenden Messfehlers auf den Messfehler der Mengenmessung ergeben. Je geringer der Abstand des thermodynamischen Zustands des gespeicherten Wasserstoffs von der Zweiphasengrenze ist, desto größer kann die Auswirkung auf den Messfehler bzw. die Messgenauigkeit der Mengenmessung sein. Somit kann die vorgegebene Mindestmessgenauigkeit Randbedingungen für eine Mindesttemperatur und/oder einen Mindestdruck des gespeicherten Wasserstoffs mit sich bringen, sodass eine daraus abgeleitete Mindesttemperatur und/oder ein daraus abgeleiteter Mindestdruck und optional eine daraus resultierende Kombination aus Temperatur und Druck nicht unterschritten werden dürfen. Das Ermitteln des Umschaltdruckniveaus in Abhängigkeit von der Mindestmessgenauigkeit kann dabei derart erfolgen, dass das Umschaltdruckniveau derart festgelegt wird, dass ein Umschalten beim Umschaltdruckniveau ein Unterschreiten der Mindestmessgenauigkeit verhindert.

Das Festlegen des Umschaltdruckniveaus als Schwellwert der Regelung für einen Übergang von der ersten zur zweiten Phase kann das Verwenden des Umschaltdrucknivenau als Grenzwert umfassen, bei Erreichen dessen die Regelung von der ersten in die zweite Phase übergeht.

Ein Verfahren zur Parametrisierung einer Regelung einer Entnahme von kryogenem Wasserstoff aus einem Kryodrucktank ist dabei als Verfahren zur Festlegung eines oder mehrerer Parameter für die Regelung der Entnahme zu verstehen. Die Parametrisierung kann optional einmalig vor oder bei der Erstinbetriebnahme eines Kryodrucktanks und/oder eines Wasserstoffspeichersystems erfolgen. Alternativ oder zusätzlich kann die Parametrisierung in regelmäßigen oder unregelmäßigen Zeitabständen erfolgen, etwa bei jedem oder bei machen Befüllvorgängen des Kryodrucktanks und/oder bei planmäßigen und/oder außerplanmäßigen Wartungsarbeiten am Kryodrucktank und/oder am Wasserstoffspeichersystem. Das Verfahren kann optional als computer-implementiertes Verfahren ausgebildet sein, d.h. dass manche oder alle Verfahrensschritte von einem Computer und/oder einer Steuereinheit durchgeführt werden.

Die Steuereinheit kann eine Recheneinheit aufweisen oder als solche ausgebildet sein. Die Recheneinheit kann optional als Computer und/oder als Mikrocontroller ausgebildet sein. Die Steuereinheit kann einen Prozessor, einen Datenspeicher und eine oder mehrere Schnittstellen zur Kommunikation mit externen Komponenten aufweisen. Optional kann die Steuereinheit mit Sensoren des Wasserstoffspeichersystems und/oder des Kryodrucktanks verbunden sein, optional mit einem Temperatursensor und/oder einem Drucksensor.

Ein Wasserstoffspeichersystem kann dabei ein System zur Speicherung und Bereitstellung von kryogenem Wasserstoff zur Versorgung eines Verbrauchers mit Wasserstoff darstellen, wobei das Wasserstoffspeichersystem einen Kryodrucktank zur Speicherung von Wasserstoff beinhalten kann, wie optional einen Tank zur Speicherung von unter hohem Druck und/oder kryo-komprimiertem Wasserstoff (CcH2).

Ein Kraftfahrzeug kann dabei als ein mit Wasserstoff betriebenes Kraftfahrzeug ausgebildet sein. Das Kraftfahrzeug kann einen oder mehrere Verbraucher von Wasserstoff aufweisen, wie etwa einen oder mehrere Wasserstoff-Verbrennungsmotoren und/oder eine oder mehrere Brennstoffzellen. Das Kraftfahrzeug kann als Nutzfahrzeug ausgebildet sein. Das Kraftfahrzeug kann als Personenkraftwagen, Kleinlastwagen, Lieferwagen, Lastkraftwagen, Reisebus, landwirtschaftliche Arbeitsmaschine, Baumaschine, Lokomotive, Wasserfahrzeug, optional als Boot, Schiff oder Unterwasserfahrzeug, und/oder Luftfahrzeug, optional als Flugzeug, Hubschrauber oder Multicopter, ausgebildet sein. Das Kraftfahrzeug kann optional derart ausgestaltet sein, dass eine Kühlflüssigkeit des Kraftfahrzeugs, welche zur Kühlung des Wasserstoff-Verbrennungsmotors und/oder zumindest einer Brennstoffzelle der einen oder der mehreren Brennstoffzellen bereitgestellt wird, als das Wärmeträgerfluid verwendet wird.

Die Offenbarung bietet den Vorteil, dass der im Kryodrucktank gespeicherte Wasserstoff durch die Regelung zur Entnahme in einem thermodynamischen Zustandsbereich gehalten werden kann, in welchem eine zuverlässige Mengenmessung des verbleibenden Wasserstoffs möglich ist. Dadurch können etwaige Unsicherheiten bei der Mengenmessung, welche sich herkömmlicherweise durch den erheblichen Einfluss eines Messfehlers bei der Temperaturmessung nahe der Zweiphasengrenze ergeben, zuverlässig reduziert oder vermieden werden. Somit kann durch die Offenbarung eine Messgenauigkeit der Mengenmessung erhöht werden.

Dadurch kann wiederum die Gefahr reduziert werden, dass der gespeicherte Wasserstoff unerwartet früh verbraucht ist, oder dass die Menge an verbleibendem Wasserstoff zu gering angegeben wird und eine verfrühte Nachbetankung unnötigerweise als erforderlich angesehen wird.

Zudem kann dadurch ein vorbestimmter Mindestabstand des thermodynamischen Zustands des gespeicherten Wasserstoffs von der Zweiphasengrenze zuverlässig eingehalten werden, sodass ein unerwünschtes Unterschreiten der Zweiphasengrenze und eine unerwünschte Verflüssigung zumindest eines Teils des gespeicherten Wasserstoffs vermieden werden können.

Ferner bietet die Offenbarung den Vorteil, dass durch die zunächst erfolgende adiabatische Entnahme der Druck im Kryodrucktank bis zum Umschaltdruckniveau abgebaut werden kann. Dies bietet den Vorteil, dass eine mechanische Belastung durch den Druck auf den Kryodrucktank bei vollem Kryodrucktank zu Beginn der Entnahme zügig abgebaut werden kann und entsprechend die mechanischen Belastungen auf den Kryodrucktank reduziert werden können. Zudem bietet dies den Vorteil, dass durch den anfänglich mittels der adiabatischen Entnahme zügig abgebauten Druck die Möglichkeit geschaffen wird, dass der gespeicherte Wasserstoff wieder Wärme aufnimmt, ohne zur Vermeidung eines zu hohen Drucks Wasserstoff aus dem Kryodrucktank ablassen zu müssen. Dadurch können längere Stehzeiten ohne Entnahme von Wasserstoff erreicht werden, in denen eine Erwärmung des gespeicherten Wasserstoffs mit einer zulässige Erhöhung des Drucks einhergeht. Dies kann insbesondere dann vorteilhaft sein, wenn der Kryodrucktank in einem Kraftfahrzeug verbaut ist und dem Kraftfahrzeug längere Stehzeiten ohne Entnahme von Wasserstoff ermöglicht werden sollen.

Ferner bietet die Offenbarung den Vorteil, dass durch das Umschalten von der adiabatischen Entnahme auf eine Entnahme unter aktiver Zufuhr von Wärme ein weiteres Absinken der Temperatur des Wasserstoffs reduziert oder vermieden werden kann. Dies kann den Vorteil bieten, dass Temperaturschwankungen des gespeicherten Wasserstoffs in einem vorgegebenen Bereich gehalten werden können und dadurch mechanische Belastungen des Kryodrucktanks durch Temperaturschwankungen reduziert werden können. Zudem kann dies den Vorteil bieten, dass die Temperatur des gespeicherten Wasserstoffs in einem derartigen Bereich gehalten werden kann, dass eine Erfordernis zum Kühlen des Kryodrucktanks und/oder des gespeicherten Wasserstoffs und/oder anderer Komponenten des Wasserstoffspeichersystems vor der weiteren Auffüllung des Kryodrucktanks reduziert oder vermieden werden kann. Dies kann somit ein unerwünschtes Aufheizen des Tanks verringern oder vermeiden. Dadurch kann die Wiederbetankbarkeit des Kryodrucktanks verbessert werden.

Zudem bietet die Offenbarung den Vorteil, dass die aktive Wärmezufuhr in der zweiten Phase zur Beibehaltung oder Erhöhung der Temperatur des Wasserstoffs aufgrund der vorherigen adiabatischen Entnahme geringer ausfallen kann, als dies der Fall wäre, wenn bei vollem Tank, d.h. ohne vorherige adiabatische Entnahme, eine Wärmezufuhr erfolgen würden. Dadurch dass durch die adiabatische Entnahme bereits Wasserstoff aus dem Kryodrucktank entnommen wurde, ist die Menge an verbleibendem Wasserstoff geringer und entsprechend auch die erforderliche Wärmemenge zur Beibehaltung oder Erhöhung der Temperatur geringer als bei vollem Kryodrucktank. Dadurch kann auch das Wärmezufuhrelement optional kleiner und/oder leichter und/oder kostengünstiger ausgestaltet werden. Entsprechend können der Platzbedarf und/oder die Herstellungskosten für ein Wasserstoffspeichersystem gering gehalten werden.

Das Regeln der Entnahme des Wasserstoffs aus dem Kryodrucktank in der zweiten Phase kann derart erfolgen, dass die Entnahme des Wasserstoffs zumindest teilweise im Wesentlichen isobar erfolgt. "Im Wesentlichen isobar" bedeutet dabei, dass dass der Druck des gespeicherten Wasserstoffs in einem vorgegebenen Toleranzbereich um einen vorgegebenen Druckwert gehalten wird, wobei der vorgegebene Toleranzbereich optional $\pm 20$ bar, $\pm 10$ bar, $\pm 5$ bar oder weniger beträgt. Der Toleranzbereich kann optional technisch bedingt sein, etwa durch eine limitierte Genauigkeit bei der Druckmessung und/oder der Wärmezufuhr. Das Regeln der Entnahme des Wasserstoffs aus dem Kryodrucktank in der zweiten Phase kann zumindest teilweise derart erfolgen, dass die aktive Zufuhr von Wärme den Druck des im Kryodrucktank gespeicherten Wasserstoffs in einem Bereich von ±20 bar um das Umschaltdruckniveau hält.

Das Regeln der Entnahme des Wasserstoffs aus dem Kryodrucktank in der zweiten Phase kann derart erfolgen, dass die Entnahme des Wasserstoffs zumindest teilweise im Wesentlichen isotherm erfolgt. "Im Wesentlichen isotherm" bedeutet dabei, dass die Entnahme derart erfolgt, dass die Temperatur des gespeicherten Wasserstoffs konstant beibehalten wird oder innerhalb eines vorgegebenen Toleranzbereichs gehalten wird. Optional kann der Toleranzbereich ±20 **K,** ±10 **K,** ±5 K oder weniger um einen vorgegebenen Temperaturwert betragen. Die im Wesentlichen isotherme Entnahme kann dabei den Vorteil bieten, dass der gespeicherte Wasserstoff bei der Entnahme nahe einer gewünschten Zieltemperatur gehalten werden kann. Dies kann den Vorteil bieten, dass Temperaturschwankungen und sich daraus ergebende thermische Belastungen des Kryodrucktanks reduzieren oder vermieden werden können. Des weiteren ermöglicht die isotherme Entnahme eine Verringerung der erforderlichen Wärmezufuhr und damit eine kleinere und/oder kompaktere und/oder kostengünstigere Ausgestaltung des Wämetauschers im Kryodrucktank. Optional kann dies den weiteren Vorteil bieten, dass der gespeicherte Wasserstoff bei einer für die Wiederbetankung besonders geeigneten Temperatur gehalten werden kann und somit ein zusätzlicher Aufwand zur Kühlung für die Betankung reduziert oder vermieden werden kann bzw. eine hohe Endkapazität bei der Wiederbetankung mit Kyrodruckgas sichergestellt werden kann. Dass die Entnahme "zumindest teilweise" isotherm erfolgt, bedeutet dabei, dass zumindest in einem Teilabschnitt der zweiten Phase die Entnahme im Wesentlichen isotherm erfolgen kann. Das Regeln der Entnahme des Wasserstoffs aus dem Kryodrucktank in der zweiten Phase kann somit zumindest teilweise derart erfolgen, dass die aktive Zufuhr von Wärme eine Temperatur des im Kryodrucktank gespeicherten Wasserstoffs in einem Bereich von ±20 K um die Temperatur des Wasserstoffs beim Übergang zur zweiten Phase hält.

Die zweite Phase kann optional einen ersten Abschnitt umfassen, in welchem die Entnahme des Wasserstoffs im Wesentlichen isobar erfolgt, und einen zweiten Abschnitt, in welchem die Entnahme des Wasserstoffs im Wesentlichen isotherm erfolgt. Die Regelung kann dabei derart erfolgen, dass ein Übergang von dem ersten Abschnitt mit der im Wesentlichen isobaren Entnahme zu dem zweiten Abschnitt mit der im Wesentlichen isothermen Entnahme beim Erreichen einer vorgegebenen Zieltemperatur des im Kryodrucktanks gespeicherten Wasserstoffs erfolgt. Dies kann den Vorteil bieten, dass zunächst im ersten Abschnitt durch die im Wesentlichen isobare Entnahme eine präzise Regelung auf Basis des sehr präzise messbaren Drucks erfolgt, wodurch etwaige Messungenauigkeiten reduziert werden können. Im Anschluss daran kann im zweiten Abschnitt eine im Wesentlichen isotherme Entnahme erfolgen, sodass die Temperatur auf einer gewünschten Zieltemperatur oder in einem vorgegebenen Toleranzbereich um die gewünschte Zieltemperatur gehalten werden kann, um somit den Kryodrucktank hinsichtlich der Temperatur in vorteilhafter Weise für die Wiederbetankung zu konditionieren.Die vorgegebene Zieltemperatur kann optional in einem Bereich von zumindest 60 K und maximal 120 K liegen.

Optional beträgt das Umschaltdruckniveau mindestens 15 bar und maximal 150 bar und optional mindestens 25 bar und maximal 120 bar. Das Umschaltdruckniveau kann optional von der Dichte und/oder der Temperatur des gespeicherten Wasserstoffs im Kryodrucktank abhängen. Die Wahl eines Umschaltdruckniveaus in den genannten Bereichen bietet den Vorteil, dass der thermodynamische Zustand des Wasserstoffs einen geeigneten Abstand von der Zweiphasengrenze aufweist, sodass eine unbeabsichtigte Verflüssigung des Wasserstoffs zuverlässig vermieden werden kann.

Das Ermitteln des Umschaltdruckniveaus kann ein Empfangen oder Abrufen eines vorgegebenen Wertes für das Umschaltdruckniveau umfassen, wobei der vorgegebene Wert in Abhängigkeit von dem bestimmten Mindestdruck derart festgelegt ist, dass bei dem Mindestdruck unter Berücksichtigung eines vorgegebenen Temperaturmessfehlers, welcher einer Temperaturmessung des gespeicherten Wasserstoffs anhaftet, die einzuhaltende Mindestmessgenauigkeit für eine Mengenmessung des im Kryodrucktank gespeicherten Wasserstoffs einhaltbar ist. Optional kann der vorgegebene Wert für das Umschaltdruckniveau im Rahmen einer initialen Einrichtung des Kryodrucktanks bzw. des Wasserstoffspeichersystems und/oder bei einer initialen Parametrisierung der Regelung hinterlegt werden. Optional kann der vorgegebene Wert in einem Speicher einer Steuereinheit des Wasserstoffspeichersystems gespeichert und daraus abrufbar sein. Optional kann der vorgegebene Wert von einer externen Datenquelle bereitgestellt werden und durch eine Steuereinheit des Wasserstoffspeichersystems abgerufen oder von dieser empfangen werden. Mit anderen Worten ausgedrückt kann das Verfahren ein Empfangen und/oder Abrufen eines vorgegebenen Wertes für das Umschaltdruckniveau empfangen, welcher als solcher für die Regelung verwendet werden kann.

Alternativ oder zusätzlich kann das Verfahren ein Empfangen und/oder Abrufen eines vorgegebenen Wertes für den Temperaturmessfehler und eines vorgegebenen Wertes für die Mindestmessgenauigkeit für die Mengenmessung des im Kryodrucktank gespeicherten Wasserstoffs, und Ermitteln des Mindestdrucks unter Verwendung des vorgegebenen Wertes für den Temperaturmessfehler und des vorgegebenen Wertes für die Mindestmessgenauigkeit und unter Berücksichtigung einer Dichte und einer Temperatur des im Kryodrucktanks gespeicherten Wasserstoffs umfassen. Mit anderen Worten kann das Verfahren ein Empfangen oder Abrufen von Vorgabewerten für den Temperaturmessfehler und für die Mindestmessgenauigkeit umfassen, und darauf basierend sodann eigenständig ein Umschaltdruckniveau ermitteln. Dabei kann das Ermitteln optional unter Berücksichtigung aktueller Gegebenheiten erfolgen, wie etwa eine aktuelle Temperatur des gespeicherten Wasserstoffs, ein aktueller Druck des gespeicherten Wasserstoffs und/oder eine aktuelle Dichte des gespeicherten Wasserstoffs.

Das Verfahren zur Parametrisierung einer Regelung einer Entnahme von kryogenem Wasserstoff aus einem Kryodrucktank eines Kraftfahrzeugs kann optional unter Berücksichtigung von bereitgestellten Informationen betreffend das Kraftfahrzeug und/oder der Umgebung des Kraftfahrzeugs erfolgen. Optional können die Informationen einen oder mehrere der folgenden Aspekte betreffen:

- einen Wasserstoffverbrauch des Kraftfahrzeugs für die Fahrt und/oder für andere Energieverbraucher, etwa für einen Kühlaufbau des Kraftfahrzeugs;
- eine oder mehrere geplante Routen, insbesondere einen zu erwartenden Verbrauch auf der einen oder den mehreren geplanten Routen, verfügbare Tankstellen auf der geplante Route, geplante Standzeiten; ein zu erwartender Routenverlauf, optional inklusive einem Höhenprofil, und/oder eine geplante Aufenthaltsdauer am Zielort; und
- Informationen über Temperatur und/oder Wetter am Ort des Kraftfahrzeugs und/oder entlang einer geplanten Route.

Die Informationen können optional dazu verwendet werden, einen oder mehrere Parameter der Regelung festzulegen und/oder anzupassen. Optional kann das Umschaltdruckniveau in Abhängigkeit einer oder mehrerer solcher Informationen festgelegt und/oder angepasst werden, optional um eine möglichst große Reichweite und/oder eine möglichst effiziente Wiederbetankung zu ermöglichen.

Die Parametrisierung der Regelung kann derart erfolgen, dass die Regelung dazu eingerichtet ist, unter Verwendung des Bereitgestellten Umschaltdruckniveaus einen Zustand des gespeicherten Wasserstoffs vorausschauend in Vorbereitung auf eine antizipierte Einwirkung auf den Zustand des Wasserstoffs zu konditionieren. Dies kann den Vorteil bieten, dass eine zur Verfügung stehende Dynamik des Zustands des gespeicherten Wasserstoffs besonders effizient genutzt werden kann. Dies kann den Vorteil bieten, dass die Anzahl erforderlicher Tankstops reduziert und/oder ein übermäßiger aktiver Wärmeeintrag in den gespeicherten Wasserstoff vermieden werden können.

Die oben genannten und im Folgenden erläuterten Merkmale und Ausführungsformen sind dabei nicht nur als in den jeweils explizit genannten Kombinationen offenbart anzusehen, sondern sind auch in anderen technisch sinnhaften Kombinationen und Ausführungsformen vom Offenbarungsgehalt umfasst.

Weitere Einzelheiten und Vorteile sollen nun anhand von den folgenden Beispielen und optionalen Ausführungsformen mit Bezug auf die Figuren näher erläutert werden.

Es zeigen:

Fig. 1          ein Wasserstoffspeichersystem gemäß einer optionalen Ausführungsform;

Fig. 2          ein Verfahren zur Regelung einer Entnahme von Wasserstoff aus einem Kryodrucktank gemäß einer optionalen Ausführungsform;

Fig. 3          ein Zustandsdiagramm zur beispielhaften Erläuterung einer Messgenauigkeit bei der Mengenmessung;

Fig. 4          ein Zustandsdiagramm zur beispielhaften Erläuterung einer Regelung zur Entnahme;

Fig. 5          ein Verfahren zur Parametrisierung einer Regelung einer Entnahme von Wasserstoff aus einem Kryodrucktank gemäß einer optionalen Ausführungsform;

Fig. 6          ein Verfahren zur Regelung einer Entnahme von Wasserstoff aus einem Kryodrucktank gemäß einer optionalen Ausführungsform;

Fig. 7          ein Kraftfahrzeug gemäß einer optionalen Ausführungsform.

Fig. 8A bis 11   optionale, beispielhafte Ausführungsformen einer Regelung einer Entnahme von kryogenem Wasserstoff aus einem Kryodrucktank.

In den folgenden Figuren werden gleiche oder ähnliche Elemente in den verschiedenen Ausführungsformen der Einfachheit halber mit gleichen Bezugszeichen bezeichnet.

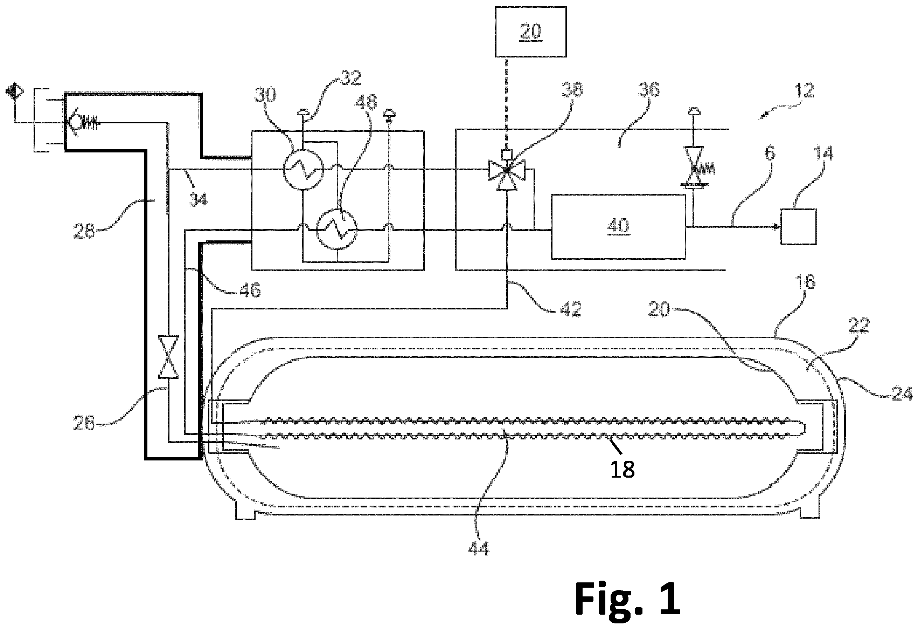

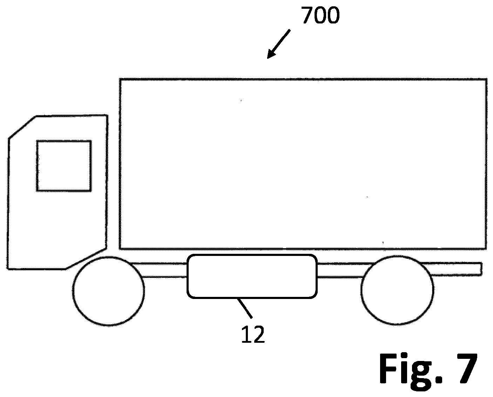

Figur 1 zeigt ein Wasserstoffspeichersystem 12 gemäß einer optionalen Ausführungsform in einer detaillierteren Ansicht. Dieses weist einen Kryodrucktank 16 auf, welcher inklusive optionaler weiterer Komponenten dargestellt ist. Das Wasserstoffspeichersystem kann dabei auf einem herkömmlichen Kryodrucktank 16 basieren, wie in der WO 2013/143773 A1 beschrieben ist. Im Kryodrucktank 16 kann kryogener Wasserstoff zur Versorgung eines Verbrauchers 14, beispielsweise einer Brennkraftmaschine, welche optional als Wasserstoff-Verbrennungsmotor ausgebildet sein kann, und/oder einer Brennstoffzelle des Kraftfahrzeugs 700 (siehe Figur 7), unter Absolutdruckwerten des Tankinnendrucks in der Größenordnung von 150 bar oder mehr, zumindest jedoch unter überkritischem Druck bei 13 bar und mehr, gespeichert werden. Dieser Kryodrucktank 16 kann einen druckfesten Innentank 20 aufweisen, innerhalb dessen sich der kryogene Wasserstoff im überkritischen Zustand befindet, zudem eine den Innentank 20 umgebende Isolationsschicht 22, in der im wesentlichen ein Vakuum vorliegen kann, d.h. ein Druck kleiner als 1 mbar, sowie eine dieses Vakuum einschließende Außenhülle 24. Über eine kombinierte und somit einflutige Befüll- und Entnahmeleitung 26 kann der Innentank 20 mit kryogenem Wasserstoff im überkritischen Zustand befüllt werden und es kann über diese Befüll-Entnahmeleitung 26, die in einer Kryo-Ventileinheit 28 mündet, Wasserstoff aus dem Innentank 20 entnommen werden. Hierfür kann an die Kryo-Ventileinheit 28 ein erster bzw. externer Wärmetauscher 30 angeschlossen sein, durch den einerseits ein erster Wärmeträgerkreislauf 32 und zweitens eine von der Kryo-Ventileinheit 28 abgehende sich dabei an die Befüll-Entnahmeleitung 26 anschließende Versorgungsleitung 34 geführt ist, die letztlich zum bereits genannten Verbraucher 14 führt. Über den Wärmetauscher 30 kann die Versorgungsleitung 34 mit dem ersten Wärmeträgerkreislauf 32 in wärmeübertragender Verbindung stehen, so dass der in der Versorgungsleitung 34 geführte Wasserstoff im externen ersten Wärmetauscher 30 erwärmt wird.

Im Anschluss an den externen ersten Wärmetauscher 30 kann die Versorgungsleitung 34 in eine zweite Ventileinheit 36 geführt werden, durch welche die Versorgungsleitung 34 unter Passieren eines Regelventils 38 sowie einer Druckanpassungseinheit 40 hindurchgeführt ist, ehe sie zum Verbraucher 14 gelangt. Dabei kann vom Regelventil 38 eine Zweigleitung 42 abzweigen, durch die aus dem Kryodrucktank 16 entnommener und im ersten (externen) Wärmetauscher 30 erwärmter Wasserstoff in einen zweiten, innerhalb des Innentanks 20 des Kryodrucktanks 16 als Wärmezufuhrelement 18 vorgesehenen (internen) Wärmetauscher 44 eingeleitet werden kann, um dem Wasserstoff Wärme zuzuführen. Nach Durchströmen dieses zweiten, innerhalb des Kryodrucktanks 16, genauer innerhalb des im Innentank 20 angeordneten Wärmetauschers 44, kann dieser Wasserstoff über eine Rückführleitung 46 in die Versorgungsleitung 34 stromabwärts der Abzweigung der Zweigleitung 42 eingeleitet werden, wobei diese Rückführleitung 46 zuvor durch einen dem ersten (externen) Wärmetauscher 30 parallel geschalteten und vom gleichen Wärmeträgerkreislauf 32 versorgten dritten (externen) Wärmetauscher 48 hindurch geführt ist, in dem der im zweiten internen Wärmetauscher 44 abgekühlte Wasserstoff durch Wärmetausch mit dem genannten Wärmeträgerkreislauf 32 wieder erwärmt wird. Es kann also der durch die Zweigleitung 42 sowie den zweiten internen Wärmetauscher 44 und die Rückführleitung 46 geführte Wasserstoff als Wärmeträgermittel zur Erwärmung des im Kryo-Drucktank 16 gespeicherten Wasserstoffs dienen.

Dabei kann die Steuerung bzw. Regelung dieser Erwärmung durch die Zufuhr von besagtem Wärmeträgermittel bzw. Wasserstoff zum internen Wärmetauscher 44 und somit durch eine geeignete Schaltstrategie des Regelventils 38 gesteuert bzw. geregelt werden. Die Steuerung bzw. Regelung des Regelventils 38 und somit der Wärmezufuhr in den Kryodrucktank kann dabei mittels einer offenbarungsgemäßen Steuereinheit 20 erfolgen.

Das Wasserstoffspeichersystem 12 ist somit zur Speicherung von kryogenem Wasserstoff ausgebildet.

Die Steuereinheit 20 kann dazu eingerichtet sein, die folgenden Schritte durchzuführen:

(i) Regeln einer Entnahme des Wasserstoffs aus dem Kryodrucktank 16 in einer ersten Phase derart, dass die Entnahme im Wesentlichen adiabatisch erfolgt.

(ii) Regeln der Entnahme des Wasserstoffs aus dem Kryodrucktank 16 in einer zweiten Phase derart, dass die Entnahme unter aktiver Zufuhr von Wärme in den im Kryodrucktank 16 gespeicherten Wasserstoff mittels des Wärmezufuhrelements 30 erfolgt.

(iii) Ermitteln eines Umschaltdruckniveaus, welches von einer einzuhaltenden Mindestmessgenauigkeit für eine Mengenmessung des im Kryodrucktank 16 gespeicherten Wasserstoffs abhängt, und

(iv) Festlegen des Umschaltdruckniveaus als Schwellwert der Regelung für einen Übergang von der ersten Phase zur zweiten Phase.

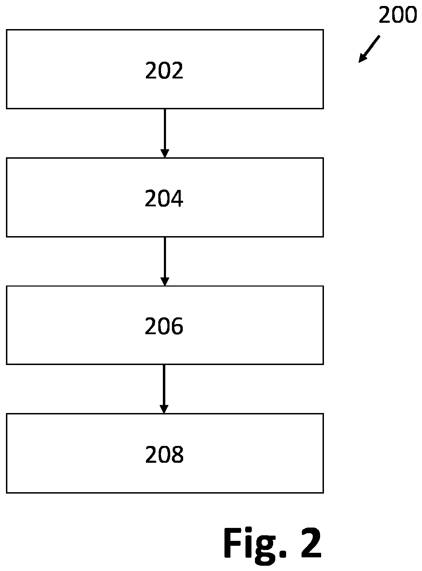

Die Steuereinheit 20 kann optional dazu eingerichtet sein, ein im Folgenden mit Bezug auf Figur 2 beschriebenes Verfahren durchzuführen.

Das Verfahren 200 kann zur Regelung einer Entnahme von kryogenem Wasserstoff aus einem Kryodrucktank dienen.

In einem Schritt 202 umfasst das Verfahren 200 ein Regeln der Entnahme des Wasserstoffs aus dem Kryodrucktank 16 in einer ersten Phase derart, dass die Entnahme im Wesentlichen adiabatisch erfolgt. Das Regeln 202 der Entnahme des Wasserstoffs aus dem Kryodrucktank in der ersten Phase kann derart erfolgen, dass während der ersten Phase keine aktive Zufuhr von Wärme in den im Kryodrucktank 16 gespeicherten Wasserstoff erfolgt.

In einem Schritt 204 umfasst das Verfahren 200 ein Regeln der Entnahme des Wasserstoffs aus dem Kryodrucktank 16 in einer zweiten Phase derart, dass die Entnahme unter aktiver Zufuhr von Wärme in den im Kryodrucktank 16 gespeicherten Wasserstoff erfogt. Das Regeln 204 der Entnahme des Wasserstoffs aus dem Kryodrucktank in der zweiten Phase kann derart erfolgen, dass die Entnahme des Wasserstoffs zumindest teilweise im Wesentlichen isobar erfolgt. Das Regeln 204 der Entnahme des Wasserstoffs aus dem Kryodrucktank in der zweiten Phase kann zumindest teilweise derart erfolgen, dass die aktive Zufuhr von Wärme den Druck des im Kryodrucktank 16 gespeicherten Wasserstoffs in einem Bereich von ±20 bar um das Umschaltdruckniveau hält. Das Regeln der Entnahme des Wasserstoffs aus dem Kryodrucktank 16 in der zweiten Phase kann derart erfolgen, dass die Entnahme des Wasserstoffs zumindest teilweise im Wesentlichen isotherm erfolgt.

In einem Schritt 206 umfasst das Verfahren ein Ermitteln eines Umschaltdruckniveaus, welches von einer einzuhaltenden Mindestmessgenauigkeit für eine Mengenmessung des im Kryodrucktank 16 gespeicherten Wasserstoffs abhängt.

In einem Schritt 208 umfasst das Verfahren 200 ein Festlegen des Umschaltdruckniveaus als Schwellwert der Regelung für einen Übergang von der ersten Phase zur zweiten Phase.

Das Regeln 204 der Entnahme des Wasserstoffs aus dem Kryodrucktank in der zweiten Phase kann zumindest teilweise derart erfolgen, dass die aktive Zufuhr von Wärme eine Temperatur des im Kryodrucktank gespeicherten Wasserstoffs in einem Bereich von ±20 K um die Temperatur des Wasserstoffs beim Übergang zur zweiten Phase hält. Dabei kann die zweite Phase einen ersten Abschnitt umfassen, in welchem die Entnahme des Wasserstoffs im Wesentlichen isobar erfolgt, und einen zweiten Abschnitt umfassen, in welchem die Entnahme des Wasserstoffs im Wesentlichen isotherm erfolgt. Die Regelung kann derart erfolgen, dass ein Übergang von dem ersten Abschnitt mit der im Wesentlichen isobaren Entnahme zu dem zweiten Abschnitt mit der im Wesentlichen isothermen Entnahme bei Erreichen einer vorgegebenen Zieltemperatur des im Kryodrucktanks 16 gespeicherten Wasserstoffs erfolgt.

Das Umschaltdruckniveau kann optional mindestens 15 bar und maximal 150 bar und optional mindetens 25 bar und maximal 120 bar betragen.

Das Ermitteln 206 des Umschaltdruckniveaus kann ein Empfangen oder Abrufen eines vorgegebenen Wertes für das Umschaltdruckniveau umfassen, wobei der vorgegebene Wert in Abhängigkeit von dem bestimmten Mindestdruck derart festgelegt ist, dass bei dem Mindestdruck unter Berücksichtigung eines vorgegebenen Temperaturmessfehlers, welcher einer Temperaturmessung des gespeicherten Wasserstoffs anhaftet, die einzuhaltende Mindestmessgenauigkeit für eine Mengenmessung des im Kryodrucktank 16 gespeicherten Wasserstoffs einhaltbar ist. Alternativ oder zusätzlich kann das Ermitteln 206 ein Empfangen und/oder Abrufen eines vorgegebenen Wertes für den Temperaturmessfehler und eines vorgegebenen Wertes für die Mindestmessgenauigkeit für die Mengenmessung des im Kryodrucktank 16 gespeicherten Wasserstoffs, und Ermitteln des Mindestdrucks unter Verwendung des vorgegebenen Wertes für den Temperaturmessfehler und des vorgegebenen Wertes für die Mindestmessgenauigkeit und unter Berücksichtigung einer Dichte und einer Temperatur des im Kryodrucktanks 16 gespeicherten Wasserstoffs umfassen.

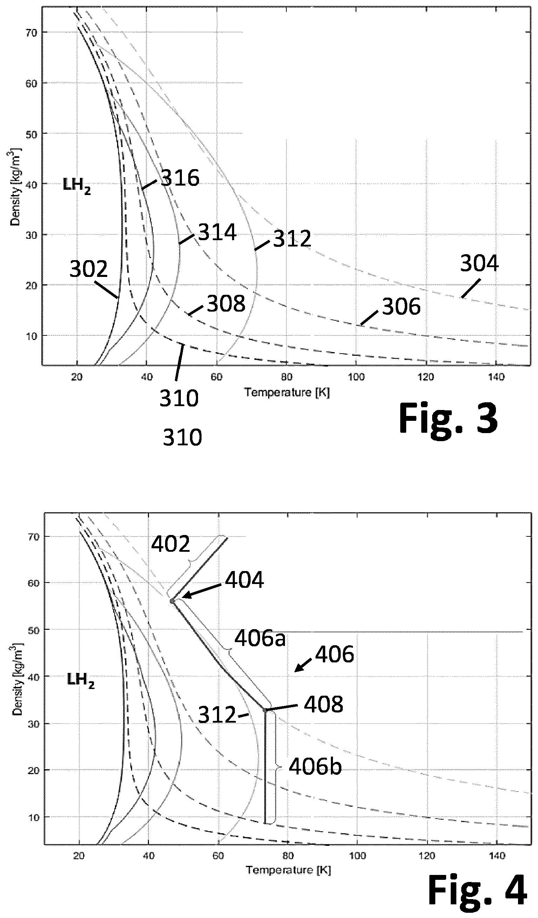

Figur 3 illustriert in einem Zustandsdiagramm schematisch die Auswirkungen, welche sich aus einer Anforderung für die Mindestmessgenauigkeit für eine Mengenmessung des im Kryodrucktank gespeicherten Wasserstoffs ergeben. Das Diagramm zeigt dabei auf der horizontalen Achse die Temperatur des im Kryodrucktanks 16 gespeicherten Wasserstoffs in Kelvin. Die vertikale Achse zeigt die Dichte des im Kryodrucktanks 16 gespeicherten Wasserstoffs in $\frac{kg}{m^3}$. Die durchgezogene Linie kennzeichnet die Zweiphasengrenze 302. In dem Bereich links der Zweiphasengrenze, also bei niedrigeren Temperaturen als der Zweiphasengrenze, tritt eine zumindest teilweise Verflüssigung des Wasserstoffs im Kryodrucktank 16 auf, wie durch die Angabe LH$_2$ indiziert ist. Da in diesem Fall keine zuverlässige Mengenmessung des verbleibenden Wasserstoffs und auch keine zuverlässige Entnahme des Wasserstoffs sichergestellt werden kann, ist dieser thermodynamische Bereich zu meiden.

Die gestrichelten Linien indizieren die Isobaren 304 bis 301 für die Drücke 100 bar (304), 50 bar (306), 25 bar (308), und 15 bar (310). Wie zu erkennen ist, verlaufen die Isobarenlinien für 15 bar und 25 bar insbesondere für Dichten von 20 $\frac{kg}{m^3}$ oder mehr sehr nahe an der Zweiphasengrenze, sodass ein weiteres Absinken der Temperatur und/oder des Drucks ein Unterschreiten der Zweiphasengrenze und somit eine zumindest teilweise Verflüssigung des gespeicherten Wasserstoffs zur Folge haben kann. Insbesondere können in solchen Bereichen, in denen sich der Wasserstoff in einem Zustand nahe der Zweiphasengrenze befindet, bereits geringe Messfehler bei der Temperaturmessung derart auswirken, dass diese zu einem unbeabsichtigten Unterschreiten der Zweiphasengrenze und zu einer unerwünschten Verflüssigung des Wasserstoffs im Kryodrucktank führen.

Bei einer Fehlertoleranz von ±1 K, welche der Temperaturmessung anhaftet, können darauf basierend Bereiche 312, 314 und 316 im Zustandsdiagramm angegeben werden, welche eine Mindestmessgenauigkeit für eine Mengenmessung mit einem Messfehler von maximal 2% (312), von maximal 5% (314) und von maximal 10% (316) bei der Mengenmessung des im Kryodrucktanks verbleibenden Wasserstoffs erlauben. Die Linien 312 bis 316 geben dabei die jeweilige Grenze an. Rechts dieser Grenzen, also bei höheren Temperaturen, ist die jeweilige Mindestmessgenauigkeit für die Mengenmessung sichergestellt. Werden diese Grenzen jedoch unterschritten, wenn also der Wasserstoff einen Zustand bei niedrigeren Temperaturen einnimmt, wird die Mindestmessgenauigkeit für die Mengenmessung aufgrund des den vorgegebenen Wert übersteigenden Messfehlers unterschritten.

Figur 4 veranschaulicht anhand des Diagramms aus Figur 3 ein Regelungskonzept gemäß einer optionalen Ausführungsform, welches die Aufrechterhaltung einer Mindestmessgenauigkeit für eine Mengenmessung sicherstellt.

Dabei erfolgt das Regeln der Entnahme des Wasserstoffs aus dem Kryodrucktank 16 in einer ersten Phase 402 derart, dass die Entnahme im Wesentlichen adiabatisch erfolgt. Dies führt zu einer Abnahme der Dichte und der Temperatur.

Bei dem Erreichen des Umschaltdruckniveaus 404, welches von einer einzuhaltenden Mindestmessgenauigkeit für eine Mengenmessung des im Kryodrucktank 16 gespeicherten Wasserstoffs abhängt und als Schwellwert der Regelung für einen Übergang von der ersten Phase zur zweiten Phase dient, erfolgt ein Übergang in die zweite Phase. In der zweiten Phase 406 erfolgt das Regeln der Entnahme des Wasserstoffs aus dem Kryodrucktank derart, dass die Entnahme unter aktiver Zufuhr von Wärme in den im Kryodrucktank 16 gespeicherten Wasserstoff erfolgt. Entsprechend nimmt in der zweiten Phase die Dichte ab während die Temperatur zunimmt oder zumindest konstant gehalten wird. Das Umschaltdruckniveau 404 wird dabei derart gewählt, dass in der zweiten Phase 406 gemäß der gezeigten optionalen Ausführungsform der Zustand des Wasserstoffs in etwa entlang der Linie mit dem Messfehler der Mengenmessung von maximal 2% verläuft. Gemäß einer anderen optionalen Ausführungsform kann ein anderer maximaler Messfehler und/oder eine andere Größe als Orientierung für die Regelung dienen.

Dabei weist die zweite Phase 406 einen ersten Abschnitt 406a und einen zweiten Abschnitt 406b auf, wobei im ersten Abschnitt die Regelung derart erfolgt, dass die Entnahme im Wesentlichen isobar erfolgt und im zweiten Abschnitt 406b derart erfolgt, dass die Entnahme im Wesentlichen isotherm erfolgt. Der Übergang vom ersten Abschnitt 406a zum zweiten Abschnitt 406b kann dabei bei Erreichen einer vorgegebenen Zieltemperatur 408 erfolgen. Dadurch kann eine Mindestmessgenauigkeit für die Mengenmessung mit einem Messfehler von maximal 2% sichergestellt werden und der Wasserstoff im Kryodrucktank bei einer Temperatur von etwa 75 K gegen Ende der Entnahme für die Wiederbetankung geeignet konditioniert werden.

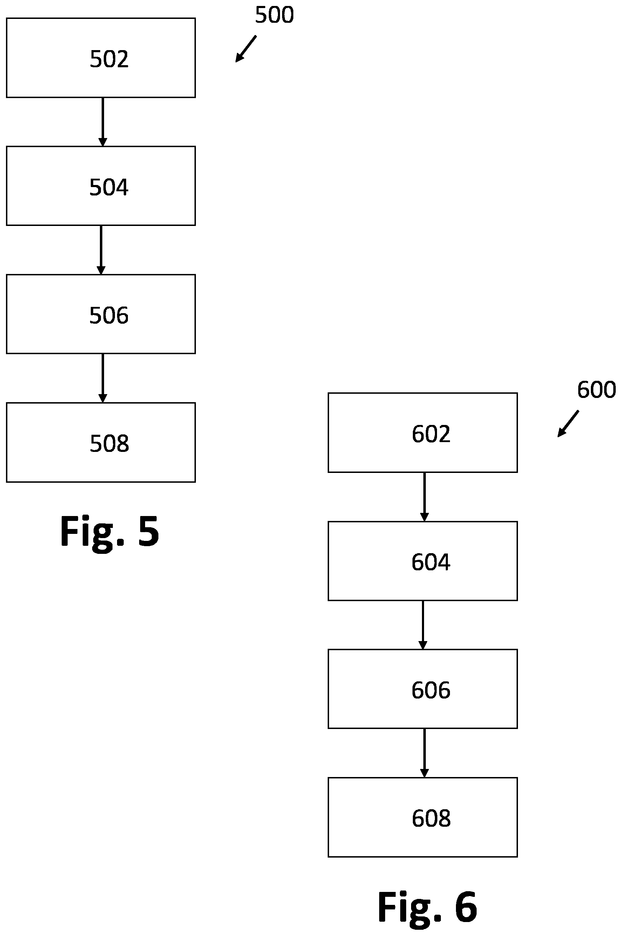

Figur 5 illustriert schematisch ein Verfahren 500 zur Parametrisierung einer Regelung einer Entnahme von kryogenem Wasserstoff aus einem Kryodrucktank 16 gemäß einer optionalen Ausführungsform.

Das Verfahren 500 umfasst in einem Schritt 502 ein Ermitteln einer vorgegebenen Mindestmessgenauigkeit für eine Mengenmessung des im Kryodrucktank 16 gespeicherten Wasserstoffs.

Das Verfahren 500 umfasst in einem Schritt 504 ein Bestimmen eines für das Erreichen der Mindestmessgenauigkeit für die Mengenmessung erforderlichen Mindestdrucks des im Kryodrucktank 16 gespeicherten Wasserstoffs in Abhängigkeit von einem vorgegebenen Temperaturmessfehler, welcher einer Temperaturmessung des gespeicherten Wasserstoffs anhaftet.

Das Verfahren 500 umfasst in einem Schritt 506 ein Festlegen eines Umschaltdruckniveaus in Abhängigkeit von dem bestimmten Mindestdruck.

Ferner umfasst das Verfahren 500 in einem Schritt 508 ein Bereitstellen des Umschaltdruckniveaus als Schwellwert für eine Regelung der Entnahme des Wasserstoffs aus dem Kryodrucktank 16 für einen Übergang von einer ersten Phase mit einer im Wesentlichen adiabatischen Entnahme des Wasserstoffs aus dem Kryodrucktank 16 zu einer zweiten Phase mit einer Entnahme des Wasserstoffs aus dem Kryodrucktank unter aktiver Zufuhr von Wärme in den im Kryodrucktank 16 gespeicherten Wasserstoff.

Figur 6 zeigt schematisch ein Verfahren 600 zur Regelung einer Entnahme von kryogenem Wasserstoff aus einem Kryodrucktank 16.

Das Verfahren 600 umfasst in einem Schritt 602 ein Regeln der Entnahme des Wasserstoffs aus dem Kryodrucktank 16 in einer ersten Phase 402 derart, dass die Entnahme im Wesentlichen adiabatisch erfolgt.

Das Verfahren umfasst in einem Schritt 604 ein Regeln der Entnahme des Wasserstoffs aus dem Kryodrucktank 16 in einer zweiten Phase 406 derart, dass die Entnahme unter aktiver Zufuhr von Wärme in den im Kryodrucktank 16 gespeicherten Wasserstoff erfolgt.

Das Verfahren 600 umfasst ferner in einem Schritt 606 ein Erhalten und/oder Bereitstellen eines gemäß einem Verfahren 500 bereitgestellten Umschaltdruckniveaus.

Figur 7 zeigt schematisch ein Kraftfahrzeug 700 mit einem Wasserstoff-Verbrennungsmotor und/oder eine oder mehrere Brennstoffzellen und mit einem Wasserstoffspeichersystem 12 gemäß der in Figur 1 gezeigten Ausführungsform, welches dazu ausgelegt ist, kryogenen Wasserstoff zu speichern und den Wasserstoff-Verbrennungsmotor und/oder die Brennstoffzelle(n) mit dem Wasserstoff aus dem Wasserstoffspeichersystem zu versorgen.

Die folgenden Figuren zeigen anhand von Zustandsdiagrammen entsprechend Figur 4 andere optionale, beispielhafte Ausführungsformen einer Regelung einer Entnahme von kryogenem Wasserstoff aus einem Kryodrucktank 16. Die Verfahren weisen dabei eine große Übereinstimmung mit dem mit Bezug zu Figur 4 erläuterten Verfahren auf, wobei die übereinstimmenden Elemente zur Vermeidung von Wiederholungen nicht erneut erläutert werden.

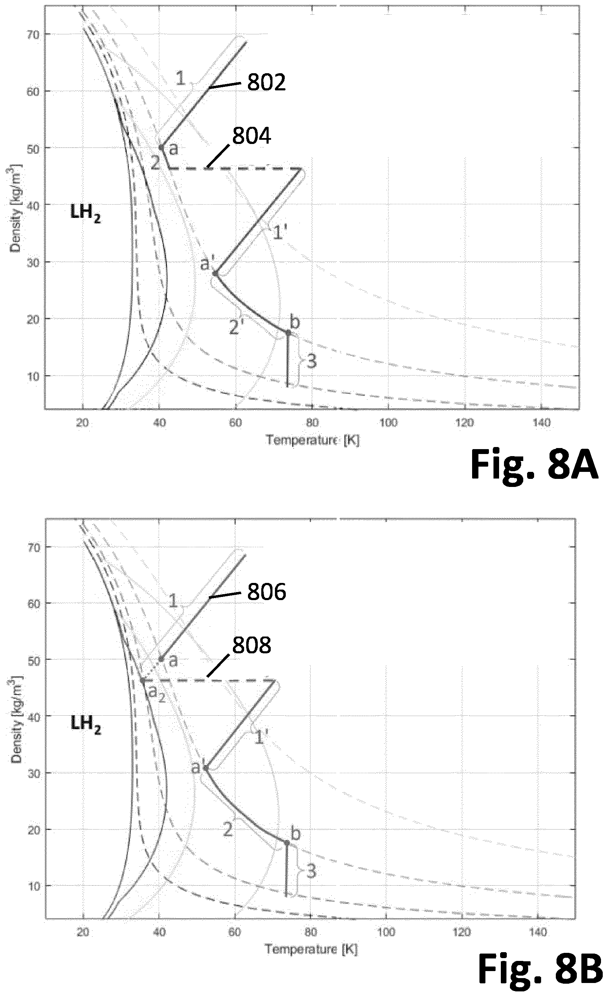

Das in Figur 8A erläuterte Verfahren zur Entnahme 800 stellt dabei eine Entnahme dar, bei welcher eine signifikante Standzeit des Kraftfahrzeugs, welches den Kryodrucktank 16 beinhaltet, auftritt. Die Regelung gemäß der in Figur 8A gezeigten optionalen Ausführungsform erfolgt dabei derart, dass der Zustand des gespeicherten Wasserstoffs der gezeigten Zustandstrajektorie 802 folgt. Dabei wird bei der Regelung der Entnahme eine Standzeit 804 oder im Allgemeinen ein Wärmeeintrag berücksichtigt, während welcher bzw. welchem kein Wasserstoff aus dem Kryodrucktank 16 entnommen wird, weil, beispielsweise, in der zugehörigen Zeitspanne das Kraftfahrzeug ruht und kein Bedarf an einer Wasserstoffentnahme vorliegt. Die Standzeit 804 kann dabei eine ungeplante Standzeit sein, welche nicht vorab bei einer Vorab-Parametrisierung der Regelung berücksichtigt werden konnte.

Die Regelung weist dabei eine erste Phase 1 auf, in der die Entnahme des Wasserstoffs adiabatisch erfolgt, bis ein vorbestimmtes Umschaltdruckniveau 'a' erreicht ist. Daran anschließend erfolgt eine zweite Phase mit den Teilabschnitten 2 und 2' und dem Abschnitt 3, in der die Entnahme unter aktiver Zufuhr von Wärme in den im Kryodrucktank gespeicherten Wasserstoff erfolgt. Im ersten Abschnitt der zweiten Phase kommt es gemäß der gezeigten, beispielhaften Ausführungsform jedoch zu einer ungeplanten Standzeit 804, in der sich der gespeicherte Wasserstoff erwärmt und entsprechend die Temperatur dessen ansteigt. Nach Beendigung der Standzeit 804 und der Wiederaufnahme der Entnahme erfolgt zunächst in einem Teilabschnitt 1' eine weitere adiabatische Entnahme, bis das Umschaltdruckniveau a' erneut erreicht ist, welches dem Umschaltdruckniveau a entspricht. Daran anschließend wird der erste Abschnitt 2 der zweiten Phase derart fortgesetzt, dass im Teilabschnitt 2' die im Wesentlichen isobare Entnahme fortgesetzt wird. Wie auch in Figur 4, erfolgt bei Erreichen einer vorgegebenen Zieltemperatur b ein Übergang zu einem Abschnitt 3, indem eine isotherme Entnahme erfolgt.

Eine derartige Regelung kann den Vorteil bieten, dass der durch die Standzeit und einen Wärmeeintrag während der Standzeit bzw. während eines anhaltenden Wärmeeintrags erhöhte Druck im Kryodrucktank bei Wiederaufnahme der Entnahme direkt wieder abgebaut wird und die bisherige Regelung der Entnahme unter aktiver Wärmezufuhr wie vorgesehen fortgesetzt werden kann.

Figur 8B zeigt eine beispielhafte Zustandstrajektorie 806, bei welcher eine Standzeit 808 und/oder ein anderweitiger Wärmeeintrag vorbekannt war, und bei der Parametrisierung der Regelung berücksichtigt wurde. Die Standzeit und/oder der anderweitige Wärmeeintrag können dabei optional durch bereitgestellte Informationen, welche bei der Parametrisierung berücksichtigt werden, in die Parametrisierung einfließen. Die bereitgestellten Informationen können optional Verkehrsdaten aus einem Navigationssystem, eine in einem Steuergerät des Kraftfahrzeugs hinterlegte, geplante Ruhezeit des Fahrers, und/oder eine geplante Standzeit des Kraftfahrzeugs auf einer Fähre und/oder an einer Grenze, und/oder Wetterdaten und die Auswirkungen des Wetters auf die geplante Fahrt umfassen. Die bereitgestellten Informationen können dabei auf einer mittels des Navigationssystems bereitgestellten, geplanten Routenführung basieren und/oder auf dem Navigationssystem und/oder dem Kraftfahrzeug bekannten Daten aus vergangenen Fahrten beruhen.

Die Regelung der Entnahme gemäß der in Figur 8B gezeigten Entnahme ist dabei derart angepasst, dass die erste Phase 1, in welcher eine im Wesentlichen adiabatische Entnahme erfolgt, zur Vorkompensation des erwarteten Druckaufbaus während der Standzeit 808 verlängert wird, sodass der Zustand des gespeicherten Wasserstoffs bis auf ein niedrigeres Umschaltdruckniveau $a_2$ abfällt, wobei das Umschaltdruckniveau nach Beendigung der Standzeit 808 erfolgt, wie auch in Figur 8A eine weitere im Wesentlichen adiabatische Entnahme 1' bis zum Erreichen des Umschaltdruckniveaus a' und anschließend in den Abschnitten 2 und 3 eine Entnahme unter aktiver Wärmezufuhr, sodass in Abschnitt 2 eine im Wesentliche isobare und in Abschnitt 3 ab Erreichen der Zieltemperatur 3 eine im Wesentlichen isotherme Entnahme erfolgt.

Dadurch kann die Temperatur des gespeicherten Wasserstoffs bei niedrigeren Temperaturen gehalten werden. Eine Nähe zur Zweiphasengrenze zu Beginn der Standzeit 808 ist dabei unkritisch, da ohne Entnahme kein Überschreiten der Zweiphasengrenze zu befürchten ist und der unvermeidliche Wärmeeintrag während der Standzeit 808 die Temperatur des gespeicherten Wasserstoffs ansteigen lässt, sodass sich der Zustand des Wasserstoffs von der Zweiphasengrenze entfernt. Dies kann somit den Vorteil bieten, dass der Kryodrucktank während der Standzeit eine größere Wärmemenge aufnehmen kann und dadurch die mögliche Dauer der Standzeit verlängert werden kann, ohne dass dem Kryodrucktank zur Vermeidung eines Überschreitens eines Maximaldrucks zwangsweise Wasserstoff entnommen werden muss.

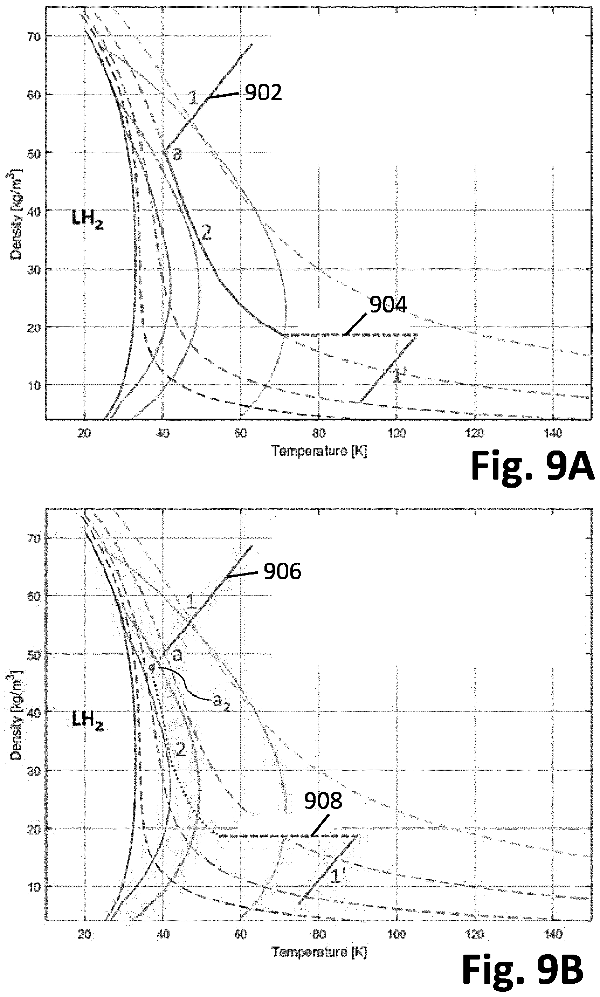

Figur 9A zeigt beispielhaft eine Zustandstrajektorie 902, bei welcher eine ungeplante Standzeit 904 in der zweiten Phase, in der eine Entnahme unter Wärmezufuhr erfolgt, auftritt. Dabei steigt während der Standzeit 904 die Temperatur des gespeicherten Wasserstoffs an.

Dem wird gemäß der dargestellten Regelung damit begegnet, dass im Anschluss an die Standzeit eine weitere im Wesentlichen adiabatische Entnahme 1' erfolgt, um die Temperatur des gespeicherten Wasserstoffs wieder zu reduzieren. Dies kann die Temperatur in oder nahe jenen Temperaturbereich bringen, in welchem eine besonders effiziente Betankung des Kryodrucktanks möglich ist, idealerweise zwischen 55K und 75K. Gemäß dem in Figur 9A gezeigten Zustandsverlauf erfolgt in Teilabschnitt 1' zwar eine deutliche Reduktion der Temperatur, allerdings wird der Temperaturbereich von 55K bis 75K nicht erreicht, sondern lediglich eine Temperatur von ca. 90K.

Figur 9B zeigt beispielhaft eine Zustandstrajektorie 906, bei welcher eine geplante Standzeit 908 in der zweiten Phase, in der eine Entnahme unter Wärmezufuhr erfolgt, vorgesehen ist. Dabei wird der zu erwartende Wärmeeintrag während der geplanten Standzeit 908, wie auch in der Ausführungsform gemäß Figur 8B, bei der Parametrisierung der Regelung berücksichtigt und zumindest teilweise vorkompensiert. Dies erfolgt durch ein Bestimmen eines Umschalt-druckniveaus $a_2$, welches bei einem niedrigeren Druckniveau liegt, als jenes Umschaltdruckniveau, welches ohne geplante Standzeit gewählt werden würde. Die Regelung der Entnahme ist dabei derart angepasst, dass die antizipierte Standzeit und der damit einhergehende Wärmeeintrag bei der Regelung berücksichtigt werden und der Zustand des gespeicherten Wasserstoffs in geeigneter Weise konditioniert wird, um eine größere Wärmemenge aufnehmen zu können. Anschließend erfolgt in Teilabschnitt 2 eine im Wesentlichen isobare Entnahme bis zum Beginn der Standzeit 908. Nach Beendigung der Standzeit erfolgt eine adiabatische Entnahme in Teilabschnitt 1', wie auch gemäß der in Figur 9A gezeigten Ausführungsform.

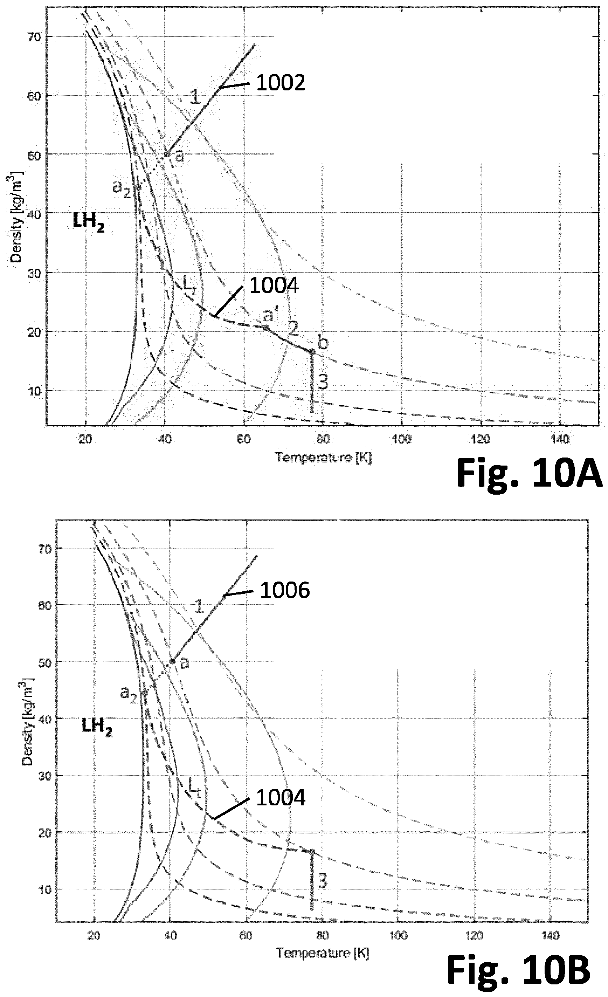

Figur 10A zeigt beispielhaft eine Zustandstrajektorie 1002, bei welcher während einer Entnahme teilweise eine erhöhte thermische Last $L_t$ in Abschnitt 1004 zu erwarten ist. Die erhöhte thermische Last $L_t$ in Abschnitt 1004 kann durch einen Wärmeeintrag erfolgen, der höher ist als in den anderen Abschnitten der Entnahme.

Dabei wird der zu erwartende Wärmeeintrag während der erhöhten thermischen Last $L_t$ in Abschnitt 1004, wie auch in den Ausführungsform gemäß den Figuren 8B und 9B, bei der Parametrisierung der Regelung berücksichtigt und zumindest teilweise vorkompensiert. Dies erfolgt durch ein Bestimmen eines Umschaltdruckniveaus $a_2$, welches bei einem niedrigeren Druckniveau liegt, als das Umschaltdruckniveau, welches ohne die zu erwartende erhöhte thermische Last gewählt werden würde. Die Regelung der Entnahme ist dabei derart angepasst, dass die erste Phase 1, in welcher eine im Wesentlichen adiabatische Entnahme erfolgt, zur Vorkompensation des erwarteten Druckaufbaus während der erhöhten thermischen Last verlängert wird, sodass der Zustand des gespeicherten Wasserstoffs bis auf ein niedrigeres Umschaltdruckniveau $a_2$ abfällt wobei das Umschaltdruckniveau $a_2$ bei einem niedrigeren Druck liegt, als das ohne Berücksichtigung der erhöhten thermischen Last vorgegebene Umschaltdruckniveau. Anschließend erfolgt bei Erreichen des Umschaltdruckniveaus a' in Teilabschnitt 2 eine im Wesentlichen isobare Entnahme bis zum Erreichen der Zieltemperatur b. Anschließend erfolgt in Abschnitt 3 eine im Wesentlichen isotherme Entnahme.

Figur 10B zeigt eine abgewandelte optionale Ausführungsform basierend auf der Ausführungsform gemäß Figur 10A. Dabei weist die Zustandstrajektorie 1006 in dem Abschnitt 1004 einen Wärmeeintrag durch die erhöhte thermische Last $L_t$ auf, der derart groß ist, dass direkt im Anschluss an den Abschnitt 1004 mit der erhöhten thermischen Last $L_t$ eine im Wesentlichen isotherme Entnahme erfolgt, ohne dass zuvor noch eine im Wesentlichen isobare Entnahme erfolgt.

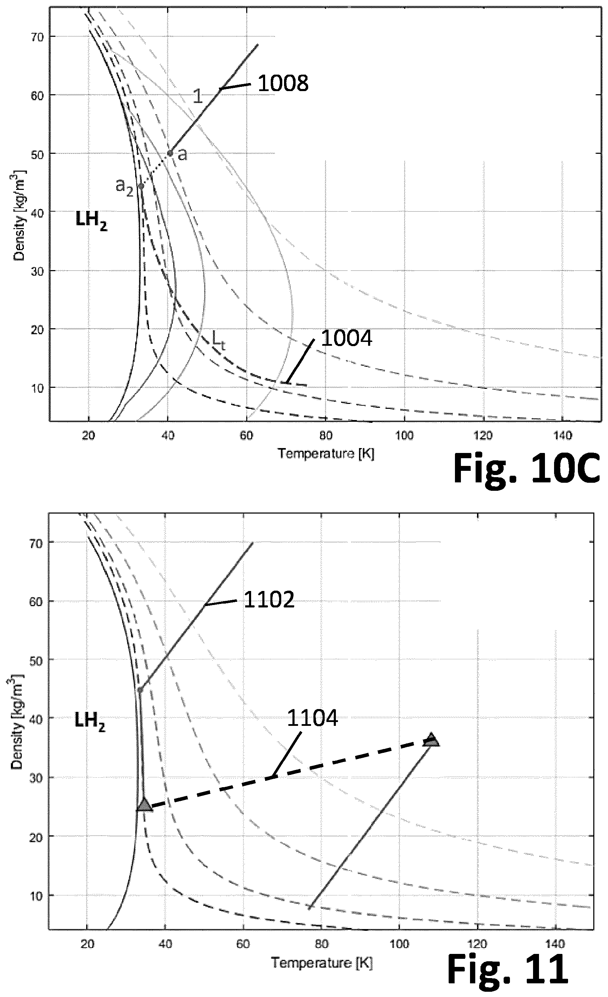

Figur 10C zeigt mit der Zustandstrajektorie 1008 eine weitere Abwandlung, gemäß welcher der Wärmeeintrag durch die erhöhte thermische Last in Abschnitt 1004 derart groß ist, dass nach diesem keine weitere Entnahme mehr vorgesehen ist. Demnach entfällt auch die im Wesentlichen isotherme Entnahme.

Die initiale adiabatische Entnahme wird optional so bemessen, dass ein vorbestimmter Mindestabstand zur Zweiphasengrenze (hier 15 bar) eingehalten wird, und der Kryodrucktank im Anschluss als Wärmesenke für eine vorausbestimmte thermische Last dienen kann und trotzdem zum vorbestimmten Zeitpunkt der Wiederbetankung ideal vorkonditioniert ist.

Unter Einbeziehung von Lage und Verfügbarkeit geeigneter Tankstellen sowie optional relevanter Verkehrsdaten kann ein Zeitpunkt einer erforderlichen Wiederbetankung mit großer Genauigkeit bestimmt (und ggf. reserviert) werden. Das angepasste Umschaltdruckniveau $a_2$ kann somit noch genauer berechnet werden. Bei einem Verfahren ohne derartige Anpassung muss mit abnehmender Dichte zunehmend dringlicher getankt werden. Die Wahl des richtigen Zeitpunktes obliegt dabei im Wesentlichen dem Fahrer des Kraftfahrzeugs.

Figur 11 zeigt beispielhaft eine Zustandstrajektorie 1102 einer Entnahme, bei welcher in Abschnitt 1104 eine geplante Zutankung von warmem Wasserstoff in den Kryodrucktank bei einem Druck von 350 bar erfolgt. Dabei erfolgt die Regelung der Entnahme derart, dass die initiale adiabatische Entnahme bis zu einem Umschaltdruckniveau sehr nahe an der Zweiphasengrenze herangeführt wird, etwa bis zu einem Druck von 15 bar und sodann bis zur Zutankung eine im Wesentlichen isobare Entnahme erfolgt. Nach der Zutankung des warmen Wasserstoffs erfolgt eine weitere adiabatische Entnahme. Trotz der warmen Betankung ist der Tank am Ziel für eine erneute CRYOGAS-Betankung ideal vorkonditioniert.

**Bezugszeichenliste**

12 Wasserstoffspeichersystem
14 Verbraucher
16 Kryodrucktank
18 Wärmezufuhrelement
20 Steuereinheit

22 Isolationsschicht
24 Außenhülle
26 Entnahmeleitung
28 Kryo-Ventileinheit
30 Wärmetauscher
32 Wärmeträgerkreislauf
34 Versorgungsleitung
36 zweite Ventileinheit
38 Regelventil
40 Druckanpassungseinheit
42 Zweigleitung
44 Wärmetauscher
46 Rückführleitung
48 Wärmetauscher

200 Verfahren zur Regelung einer Entnahme von Wasserstoff aus einem Kryodrucktank
202 - 208 Verfahrensschritte

302 Zweiphasengrenze
304 - 310 Isobarenlinien
312 - 316 Grenzen für Mindestmessgenauigkeit

402 erste Phase einer Regelung
404 Umschaltdruckniveau
406 zweite Phase
406a erster Abschnitt der zweiten Phase
406b zweiter Abschnitt der zweiten Phase

500 Verfahren zur Parametrisierung einer Regelung einer Entnahme von kryogenem Wasserstoff aus einem Kryodrucktank
502 - 508 Verfahrensschritte

600 Verfahren zur Regelung einer Entnahme von Wasserstoff aus einem Kryodrucktank
602 - 608 Verfahrensschritte

700 Kraftfahrzeug

802, 806, 902, 906, 1002, 1006, 1008, 1102      Zustandstrajektorie
804, 808, 904, 908      Abschnitt mit Wärmeeintrag / Standzeit
1004      Abschnitt mit ehröhter thermischer Last
1104      Zutankung

**Patentansprüche**

1. Verfahren (200) zur Regelung einer Entnahme von kryogenem Wasserstoff aus einem Kryodrucktank (16), das Verfahren (200) umfassend:

- Regeln (202) der Entnahme des Wasserstoffs aus dem Kryodrucktank (18) in einer ersten Phase (402) derart, dass die Entnahme im Wesentlichen adiabatisch erfolgt; und
- Regeln (204) der Entnahme des Wasserstoffs aus dem Kryodrucktank (18) in einer zweiten Phase (406) derart, dass die Entnahme unter aktiver Zufuhr von Wärme in den im Kryodrucktank (18) gespeicherten Wasserstoff erfolgt;

**dadurch gekennzeichnet, dass** das Verfahren (200) ferner umfasst:

- Ermitteln (206) eines Umschaltdruckniveaus (404), welches von einer einzuhaltenden Mindestmessgenauigkeit für eine Mengenmessung des im Kryodrucktank (18) gespeicherten Wasserstoffs abhängt; und
- Festlegen (208) des Umschaltdruckniveaus (404) als Schwellwert der Regelung für einen Übergang von der ersten Phase (402) zur zweiten Phase (406).

2. Verfahren (200) gemäß Anspruch 1, wobei das Regeln (204) der Entnahme des Wasserstoffs aus dem Kryodrucktank (16) in der zweiten Phase (406) derart erfolgt, dass die Entnahme des Wasserstoffs zumindest teilweise im Wesentlichen isobar erfolgt.

3. Verfahren (200) gemäßAnspruch 1 oder 2, wobei das Regeln (204) der Entnahme des Wasserstoffs aus dem Kryodrucktank (18) in der zweiten Phase (406) zumindest teilweise derart erfolgt, dass die aktive Zufuhr von Wärme den Druck des im Kryodrucktank (18) gespeicherten Wasserstoffs in einem Bereich von $\pm 20$ bar um das Umschaltdruckniveau (404) hält.

4. Verfahren (200) gemäß einem der vorhergehenden Ansprüche, wobei das Regeln (204) der Entnahme des Wasserstoffs aus dem Kryodrucktank (18) in der zweiten Phase (406) derart erfolgt, dass die Entnahme des Wasserstoffs zumindest teilweise im Wesentlichen isotherm erfolgt.

5. Verfahren (200) gemäß einem der vorhergehenden Ansprüche, wobei das Regeln (204) der Entnahme des Wasserstoffs aus dem Kryodrucktank (18) in der zweiten Phase (406) zumindest teilweise derart erfolgt, dass die aktive Zufuhr von Wärme eine Temperatur des im Kryodrucktank (18) gespeicherten Wasserstoffs in einem Bereich von $\pm 20$ K um die Temperatur des Wasserstoffs beim Übergang zur zweiten Phase (406) hält.

6. Verfahren (200) gemäß einem der vorhergehenden Ansprüche, wobei die zweite Phase (406) einen ersten Abschnitt (406a) umfasst, in welchem die Entnahme des Wasserstoffs im Wesentlichen isobar erfolgt, und einen zweiten Abschnitt (106b) umfasst, in welchem die Entnahme des Wasserstoffs im Wesentlichen isotherm erfolgt.

7. Verfahren (200) gemäß Anspruch 6, wobei die Regelung derart erfolgt, dass ein Übergang von dem ersten Abschnitt (406a) mit der im Wesentlichen isobaren Entnahme zu dem zweiten Abschnitt (406b) mit der im Wesentlichen isothermen Entnahme bei Erreichen einer vorgegebenen Zieltemperatur (408) des im Kryodrucktanks (18) gespeicherten Wasserstoffs erfolgt.

8. Verfahren (200) gemäß einem der vorhergehenden Ansprüche, wobei das Umschaltdruckniveau (404) mindestens 15 bar und maximal 150 bar und optional mindestens 25 bar und maximal 120 bar beträgt.

9. Verfahren (200) gemäß einem der vorhergehenden Ansprüche, wobei das Ermitteln (206) des Umschaltdruckniveaus (404) einen oder mehrere der folgenden Schritte umfasst:

   - Empfangen oder Abrufen eines vorgegebenen Wertes für das Umschaltdruckniveau (404), wobei der vorgegebene Wert in Abhängigkeit von einem bestimmten Mindestdruck derart festgelegt ist, dass bei dem Mindestdruck unter Berücksichtigung eines vorgegebenen Temperaturmessfehlers, welcher einer Temperaturmessung des gespeicherten Wasserstoffs anhaftet, die einzuhaltende Mindestmessgenauigkeit für eine Mengenmessung des im Kryodrucktank (18) gespeicherten Wasserstoffs einhaltbar ist; und/oder
   - Empfangen und/oder Abrufen eines vorgegebenen Wertes für den Temperaturmessfehler und eines vorgegebenen Wertes für die Mindestmessgenauigkeit für die Mengenmessung des im Kryodrucktank (18) gespeicherten Wasserstoffs, und Ermitteln des Mindestdrucks unter Verwendung des vorgegebenen Wertes für den Temperaturmessfehler und des vorgegebenen Wertes für die Mindestmessgenauigkeit und unter Berücksichtigung einer Dichte und einer Temperatur des im Kryodrucktanks (18) gespeicherten Wasserstoffs.

10. Steuereinheit (20) zur Regelung einer Entnahme von in einem Kryodrucktank gespeichertem kryogenem Wasserstoff aus dem Kryodrucktank (18), wobei die Steuereinheit (20) dazu eingerichtet ist, ein Verfahren (200) gemäß einem der vorhergehenden Ansprüche auszuführen.

11. Wasserstoffspeichersystem (12) zur Speicherung von kryogenem Wasserstoff, umfassend:

   - einen Kryodrucktank (16), welcher dazu ausgelegt ist, kryogenen Wasserstoff bei einem überkritischen Druck zu speichern;
   - ein Wärmezufuhrelement (18), welches dazu ausgelegt ist, dem im Kryodrucktank (16) gespeicherten Wasserstoff Wärme zuzuführen;
   - eine Steuereinheit (20), welche dazu eingerichtet ist, die folgenden Schritte durchzuführen:

- Regeln (202) einer Entnahme des Wasserstoffs aus dem Kryodrucktank (18) in einer ersten Phase (402) derart, dass die Entnahme im Wesentlichen adiabatisch erfolgt; und
- Regeln (204) der Entnahme des Wasserstoffs aus dem Kryodrucktank (18) in einer zweiten Phase (406) derart, dass die Entnahme unter aktiver Zufuhr von Wärme in den im Kryodrucktank (16) gespeicherten Wasserstoff mittels des Wärmezufuhrelements (18) erfolgt;

**dadurch gekennzeichnet, dass** das die Steuereinheit (20) ferner dazu eingerichtet ist, die folgenden Schritte durchzuführen:

- Ermitteln (206) eines Umschaltdruckniveaus (404), welches von einer einzuhaltenden Mindestmessgenauigkeit für eine Mengenmessung des im Kryodrucktank (16) gespeicherten Wasserstoffs abhängt; und
- Festlegen (208) des Umschaltdruckniveaus (404) als Schwellwert der Regelung für einen Übergang von der ersten Phase (402) zur zweiten Phase (404).

12. Kraftfahrzeug (700), aufweisend:

- einen Wasserstoff-Verbrennungsmotor und/oder eine oder mehrere Brennstoffzellen; und
- ein Wasserstoffspeichersystem (12) gemäß Anspruch 11, welches dazu ausgelegt ist, kryogenen Wasserstoff zu speichern und den Wasserstoff-Verbrennungsmotor und/oder die Brennstoffzelle(n) mit dem Wasserstoff aus dem Wasserstoffspeichersystem (12) zu versorgen.

13. Verfahren (500) zur Parametrisierung einer Regelung einer Entnahme von kryogenem Wasserstoff aus einem Kryodrucktank (16), das Verfahren umfassend:

- Ermitteln (502) einer vorgegebenen Mindestmessgenauigkeit für eine Mengenmessung des im Kryodrucktank (16) gespeicherten Wasserstoffs;
- Bestimmen (504) eines für das Erreichen der Mindestmessgenauigkeit für die Mengenmessung erforderlichen Mindestdrucks des im Kryodrucktank (16) gespeicherten Wasserstoffs in Abhängigkeit von einem vorgegebenen Temperaturmessfehler, welcher einer Temperaturmessung des gespeicherten Wasserstoffs anhaftet;
- Festlegen (506) eines Umschaltdruckniveaus (404) in Abhängigkeit von dem bestimmten Mindestdruck; und
- Bereitstellen (508) des Umschaltdruckniveaus (404) als Schwellwert für eine Regelung der Entnahme des Wasserstoffs aus dem Kryodrucktank (16) für einen Übergang von einer ersten Phase mit einer im Wesentlichen adiabatischen Entnahme des Wasserstoffs aus dem Kryodrucktank (16) zu einer zweiten Phase (406) mit einer Entnahme des Wasserstoffs aus dem Kryodrucktank (16) unter aktiver Zufuhr von Wärme in den im Kryodrucktank (16) gespeicherten Wasserstoff.

14. Verfahren gemäß Anspruch 13, wobei die Parametrisierung der Regelung derart erfolgt, dass die Regelung dazu eingerichtet ist, unter Verwendung des Bereitgestellten Umschaltdruckniveaus einen Zustand des gespeicherten Wasserstoffs vorausschauend in Vorbereitung auf eine antizipierte Einwirkung auf den Zustand des Wasserstoffs zu konditionieren.

15. Verfahren (600) zur Regelung einer Entnahme von kryogenem Wasserstoff aus einem Kryodrucktank (16), das Verfahren (600) umfassend:

- Regeln (602) der Entnahme des Wasserstoffs aus dem Kryodrucktank (16) in einer ersten Phase (402) derart, dass die Entnahme im Wesentlichen adiabatisch erfolgt; und
- Regeln (604) der Entnahme des Wasserstoffs aus dem Kryodrucktank (16) in einer zweiten Phase (406) derart, dass die Entnahme unter aktiver Zufuhr von Wärme in den im Kryodrucktank (16) gespeicherten Wasserstoff erfolgt;

**dadurch gekennzeichnet, dass** das Verfahren (60) ferner umfasst:

- Erhalten (606) und/oder Bereitstellen eines gemäß einem Verfahren nach Anspruch 14 bereitgestellten Umschaltdruckniveaus (404); und
- Festlegen (608) des Umschaltdruckniveaus als Schwellwert der Regelung für einen Übergang von der ersten Phase zur zweiten Phase.

Claims

1. A method (200) for controlling a cryogenic hydrogen withdrawal from a cryogenic pressure tank (16), the method (200) comprising:

   - controlling (202) the withdrawal of hydrogen from the cryogenic pressure tank (18) in a first phase (402) such that the withdrawal is substantially adiabatic; and
   - controlling (204) the withdrawal of hydrogen from the cryogenic pressure tank (18) in a second phase (406) such that the withdrawal takes place with active supply of heat into the hydrogen stored in the cryogenic pressure tank (18);

   **characterized in that** the method (200) further comprises:

   - ascertaining (206) a switching pressure level (404) which depends on a minimum measurement accuracy to be maintained for a quantity measurement of the hydrogen stored in the cryogenic pressure tank (18); and
   - setting (208) the switching pressure level (404) as control threshold for a transition from the first phase (402) to the second phase (406).

2. The method (200) according to claim 1, wherein the controlling (204) the withdrawal of hydrogen from the cryogenic pressure tank (16) in the second phase (406) is carried out such that the withdrawal of hydrogen is at least partially substantially isobaric.

3. The method (200) according to claim 1 or 2, wherein the controlling (204) the withdrawal of the hydrogen from the cryogenic pressure tank (18) in the second phase (406) is carried out at least partially such that the active supply of heat maintains the pressure of the hydrogen stored in the cryogenic pressure tank (18) within a range of $\pm 20$ bar around the switching pressure level (404).

4. The method (200) according to any one of the preceding claims, wherein the controlling (204) the withdrawal of the hydrogen from the cryogenic pressure tank (18) in the second phase (406) is carried out such that the withdrawal of hydrogen is at least partially substantially isothermic.

5. The method (200) according to any one of the preceding claims, wherein the controlling (204) the withdrawal of the hydrogen from the cryogenic pressure tank (18) in the second phase (406) is at least partially carried out such that the active supply of heat maintains a temperature of the hydrogen stored in the cryogenic pressure tank (18) within a range of $\pm 20$ K around the temperature of the hydrogen at the transition to the second phase (406).

6. The method (200) according to any one of the preceding claims, wherein the second phase (406) comprises a first section (406a) in which the withdrawal of hydrogen is substantially isobaric, and a second section (106b) in which the withdrawal of hydrogen is substantially isothermic.

7. The method (200) according to claim 6, wherein the control is performed in such a way that a transition from the first section (406a) with substantially isobaric withdrawal to the second section (406b) with substantially isothermic withdrawal takes place upon reaching a predetermined target temperature (408) of the hydrogen stored in the cryogenic pressure tank (18).

8. The method (200) according to any one of the preceding claims, wherein the switching pressure level (404) is at least 15 bar and at most 150 bar and optionally at least 25 bar and at most 120 bar.

9. The method (200) according to any one of the preceding claims, wherein the determining (206) the switching pressure level (404) comprises one or more of the following steps:

   - receiving or retrieving a predetermined value for the switching pressure level (404), wherein the predetermined value is set as a function of a determined minimum pressure such that, at the minimum pressure and taking into account a predetermined temperature measurement error inherent in a temperature measurement of the stored hydrogen, the minimum measurement accuracy to be maintained for a quantity measurement of the hydrogen stored in the cryogenic pressure tank (18) can be maintained; and/or
   - receiving and/or retrieving a predetermined value for the temperature measurement error and a predetermined value for the minimum measurement accuracy for the quantity measurement of the hydrogen stored in the cryogenic pressure tank (18), and determining the minimum pressure using the predetermined value for the temperature measurement error and the predetermined value for the minimum measurement accuracy and taking into account a density and a temperature of the hydrogen stored in the cryogenic pressure tank (18).

10. A control unit (20) for controlling the withdrawal of cryogenic hydrogen stored in a cryogenic pressure tank from the cryogenic pressure tank (18), wherein the control unit (20) is configured to perform a method (200) according to any one of the preceding claims.

11. A hydrogen storage system (12) for storing cryogenic hydrogen, comprising:

  - a cryogenic pressure tank (16) designed to store cryogenic hydrogen at a supercritical pressure;
  - a heat supply element (18) designed to supply heat to the hydrogen stored in the cryogenic pressure tank (16);
  - a control unit (20) which is configured to perform the following steps:

    - controlling (202) a withdrawal of the hydrogen from the cryogenic pressure tank (18) in a first phase (402) such that the withdrawal is substantially adiabatic; and
    - controlling (204) the withdrawal of the hydrogen from the cryogenic pressure tank (18) in a second phase (406) such that the withdrawal takes place with active supply of heat into the hydrogen stored in the cryogenic pressure tank (16) by means of the heat supply element (18);

  **characterized in that** the control unit (20) is further configured to perform the following steps:

    - determining (206) a switching pressure level (404) which depends on a minimum measurement accuracy to be maintained for a quantity measurement of the hydrogen stored in the cryogenic pressure tank (16); and
    - setting (208) the switching pressure level (404) as the control threshold for a transition from the first phase (402) to the second phase (404).

12. A motor vehicle (700), having:

  - a hydrogen combustion engine and/or one or more fuel cells; and
  - a hydrogen storage system (12) according to claim 11, which is designed to store cryogenic hydrogen and to supply the hydrogen combustion engine and/or the fuel cell(s) with the hydrogen from the hydrogen storage system (12).

13. A method (500) for parameterizing a control of a cryogenic hydrogen withdrawal from a cryogenic pressure tank (16), the method comprising:

  - ascertaining (502) a predetermined minimum measurement accuracy for a quantity measurement of the hydrogen stored in the cryogenic pressure tank (16);
  - determining (504) a minimum pressure of the hydrogen stored in the cryogenic pressure tank (16) required to achieve the minimum measurement accuracy for the quantity measurement, depending on a predetermined temperature measurement error which is inherent in a temperature measurement of the stored hydrogen;
  - setting (506) a switching pressure level (404) depending on the specified minimum pressure; and
  - providing (508) the switching pressure level (404) as a threshold for controlling the withdrawal of hydrogen from the cryogenic pressure tank (16) for a transition from a first phase with an substantially adiabatic withdrawal of hydrogen from the cryogenic pressure tank (16) to a second phase (406) with a withdrawal of hydrogen from the cryogenic pressure tank (16) with active supply of heat into the hydrogen stored in the cryogenic pressure tank (16).

14. The method according to claim 13, wherein the parameterization of the control is such that the control is configured to condition a state of the stored hydrogen in anticipation of an anticipated effect on the state of the hydrogen using the provided switching pressure level.

15. A method (600) for controlling a cryogenic hydrogen withdrawal from a cryogenic pressure tank (16), the method (600) comprising:

  - controlling (602) the withdrawal of the hydrogen from the cryogenic pressure tank (16) in a first phase (402) such that the withdrawal is substantially adiabatic; and

- controlling (604) the withdrawal of the hydrogen from the cryogenic pressure tank (16) in a second phase (406) such that the withdrawal takes place with active supply of heat into the hydrogen stored in the cryogenic pressure tank (16);

**characterized in that** the method (60) further comprises:

- obtaining (606) and/or providing a switching pressure level (404) provided according to a method according to claim 14; and
- setting (608) the switching pressure level as the control threshold for a transition from the first phase to the second phase.

**Revendications**

1. Procédé (200) de régulation d'un prélèvement d'hydrogène cryogénique d'un réservoir de cryo-pression (16), le procédé (200) comprenant :

- la régulation (202) du prélèvement de l'hydrogène du réservoir de cryo-pression (18) dans une première phase (402) de sorte que le prélèvement est effectué de manière essentiellement adiabatique ; et
- la régulation (204) du prélèvement de l'hydrogène du réservoir de cryo-pression (18) dans une seconde phase (406) de sorte que le prélèvement est effectué sous apport actif de chaleur dans l'hydrogène stocké dans le réservoir de cryo-pression (18) ;

**caractérisé en ce que** le procédé (200) comprend en outre :

- la détermination (206) d'un niveau de pression de commutation (404) qui dépend d'une précision de mesure minimale à maintenir pour une mesure de la quantité de l'hydrogène stocké dans le réservoir de cryo-pression (18) ; et
- la définition (208) du niveau de pression de commutation (404) comme valeur seuil de la régulation pour une transition de la première phase (402) à la seconde phase (406).

2. Procédé (200) selon la revendication 1, dans lequel la régulation (204) du prélèvement de l'hydrogène du réservoir de cryo-pression (16) dans la seconde phase (406) est effectuée de telle sorte que le prélèvement de l'hydrogène est effectué au moins partiellement de manière essentiellement isobare.

3. Procédé (200) selon la revendication 1 ou 2, dans lequel la régulation (204) du prélèvement de l'hydrogène du réservoir de cryo-pression (18) dans la seconde phase (406) est effectuée au moins partiellement de telle sorte que l'apport actif de chaleur maintienne la pression de l'hydrogène stocké dans le réservoir de cryo-pression (18) dans une plage de ±20 bar autour du niveau de pression de commutation (404).

4. Procédé (200) selon l'une quelconque des revendications précédentes, dans lequel la régulation (204) du prélèvement de l'hydrogène du réservoir de cryo-pression (18) dans la seconde phase (406) est effectuée de telle sorte que le prélèvement de l'hydrogène est effectué au moins partiellement de manière essentiellement isotherme.

5. Procédé (200) selon l'une quelconque des revendications précédentes, dans lequel la régulation (204) du prélèvement de l'hydrogène du réservoir de cryo-pression (18) dans la seconde phase (406) est au moins partiellement effectuée de telle sorte que l'apport actif de chaleur maintienne une température de l'hydrogène stocké dans le réservoir de cryo-pression (18) dans une plage de ±20 K autour de la température de l'hydrogène lors de la transition vers la seconde phase (406).

6. Procédé (200) selon l'une quelconque des revendications précédentes, dans lequel la seconde phase (406) comprend une première section (406a), dans laquelle le prélèvement de l'hydrogène est effectué de manière essentiellement isobare, et une seconde section (106b) dans laquelle le prélèvement de l'hydrogène est effectué de manière sensiblement isotherme.

7. Procédé (200) selon la revendication 6, dans lequel la régulation est effectuée de telle sorte qu'une transition de la première section (406a) avec le prélèvement essentiellement isobare à la seconde section (406b) avec le prélèvement essentiellement isotherme est effectuée lors de l'atteinte d'une température cible prédéterminée (408) de l'hydrogène stocké dans le réservoir de cryo-pression (18).

8.  Procédé (200) selon l'une quelconque des revendications précédentes, dans lequel le niveau de pression de commutation (404) est d'au moins 15 bar et d'au plus 150 bar et éventuellement d'au moins 25 bar et d'au plus 120 bar.

9.  Procédé (200) selon l'une quelconque des revendications précédentes, dans lequel la détermination (206) du niveau de pression de commutation (404) comprend une ou plusieurs des étapes suivantes :

    - la réception ou la récupération d'une valeur prédéterminée pour le niveau de pression de commutation (404), dans lequel la valeur prédéterminée est définie en fonction d'une pression minimale spécifiée de sorte que, à la pression minimale et compte tenu d'une erreur de mesure de température prédéterminée inhérente à la mesure de la température de l'hydrogène stocké, la précision de mesure minimale à maintenir pour une mesure de la quantité de l'hydrogène stocké dans le réservoir de cryo-pression (18) puisse être maintenue ; et/ou
    - la réception et/ou la récupération d'une valeur prédéterminée pour l'erreur de mesure de température et une valeur prédéterminée pour la précision de mesure minimale pour la mesure de la quantité d'hydrogène stocké dans le réservoir de cryo-pression (18), et la détermination de la pression minimale en utilisant la valeur prédéterminée pour l'erreur de mesure de température et la valeur prédéterminée pour la précision de mesure minimale et en tenant compte d'une densité et d'une température de l'hydrogène stocké dans le réservoir de cryo-pression (18).

10. Unité de commande (20) pour la régulation d'un prélèvement d'hydrogène cryogénique stocké dans un réservoir de cryo-pression du réservoir de cryo-pression (18), dans laquelle l'unité de commande (20) est configurée pour exécuter un procédé (200) selon l'une quelconque des revendications précédentes.

11. Système de stockage d'hydrogène (12) pour le stockage d'hydrogène cryogénique, comprenant :

    - un réservoir de cryo-pression (16) conçu pour stocker de l'hydrogène cryogénique à une pression supercritique ;
    - un élément d'apport de chaleur (18) conçu pour apporter de la chaleur à l'hydrogène stocké dans le réservoir de cryo-pression (16) ;
    - une unité de commande (20) configurée pour effectuer les étapes suivantes :

        - la régulation (202) d'un prélèvement de l'hydrogène du réservoir de cryo-pression (18) dans une première phase (402) de sorte que le prélèvement est effectué de manière essentiellement adiabatique ; et
        - la régulation (204) du prélèvement de l'hydrogène du réservoir de cryo-pression (18) dans une seconde phase (406) de sorte que le prélèvement est effectué sous apport actif de chaleur dans l'hydrogène stocké dans le réservoir de cryo-pression (16) à l'aide de l'élément d'apport de chaleur (18) ;

    **caractérisé en ce que** l'unité de commande (20) est en outre configurée pour effectuer les étapes suivantes :

        - la détermination (206) d'un niveau de pression de commutation (404) qui dépend d'une précision de mesure minimale à maintenir pour une mesure de la quantité de l'hydrogène stocké dans le réservoir de cryo-pression (16) ; et
        - la définition (208) du niveau de pression de commutation (404) comme valeur seuil de la régulation pour une transition de la première phase (402) à la seconde phase (404).

12. Véhicule automobile (700), comprenant :

    - un moteur à combustion d'hydrogène et/ou une ou plusieurs piles à combustible ; et
    - un système de stockage d'hydrogène (12) selon la revendication 11, conçu pour stocker de l'hydrogène cryogénique et pour alimenter le moteur à combustion d'hydrogène et/ou la ou les piles à combustible avec l'hydrogène provenant du système de stockage d'hydrogène (12).

13. Procédé (500) de paramétrage d'une régulation d'un prélèvement d'hydrogène cryogénique d'un réservoir de cryo-pression (16), le procédé comprenant :

    - la détermination (502) d'une précision de mesure minimale prédéterminée pour une mesure de la quantité de l'hydrogène stocké dans le réservoir de cryo-pression (16) ;

- l'établissement (504) d'une pression minimale de l'hydrogène stocké dans le réservoir de cryo-pression (16) requise pour atteindre la précision de mesure minimale pour la mesure de la quantité, en fonction d'une erreur de mesure de température prédéterminée qui est inhérente à une mesure de température de l'hydrogène stocké ;

- la définition (506) d'un niveau de pression de commutation (404) en fonction de la pression minimale spécifiée ; et

- la fourniture (508) du niveau de pression de commutation (404) comme valeur seuil pour une régulation du prélèvement de l'hydrogène du réservoir de cryo-pression (16) pour une transition d'une première phase avec un prélèvement de l'hydrogène du réservoir de cryo-pression essentiellement adiabatique (16) à une seconde phase (406) avec un prélèvement de l'hydrogène du réservoir de cryo-pression (16) sous apport actif de chaleur dans l'hydrogène stocké dans le réservoir de cryo-pression (16).

14. Procédé selon la revendication 13, dans lequel le paramétrage de la régulation est effectué de telle sorte que la régulation est configurée pour conditionner un état de l'hydrogène stocké en prévision d'un effet anticipé sur l'état de l'hydrogène en utilisant le niveau de pression de commutation fourni.

15. Procédé (600) de régulation d'un prélèvement d'hydrogène cryogénique d'un réservoir de cryo-pression (16), le procédé (600) comprenant :

- la régulation (602) du prélèvement de l'hydrogène du réservoir de cryo-pression (16) dans une première phase (402) de sorte que le prélèvement est effectué de manière essentiellement adiabatique ; et

- la régulation (604) du prélèvement de l'hydrogène du réservoir de cryo-pression (16) dans une seconde phase (406) de sorte que le prélèvement est effectué sous apport actif de chaleur dans l'hydrogène stocké dans le réservoir de cryo-pression (16) ;

**caractérisé en ce que** le procédé (60) comprend en outre :

- l'obtention (606) et/ou la fourniture d'un niveau de pression de commutation fourni (404) selon un procédé de la revendication 14 ; et

- la définition (608) du niveau de pression de commutation comme valeur seuil de la régulation pour une transition de la première phase à la seconde phase.

**Fig. 1**

EP 4 644 762 B1

200

202

204

206

208

**Fig. 2**

Fig. 3

Fig. 4

Fig. 5

Fig. 6

700

12

**Fig. 7**

**Fig. 8A**

**Fig. 8B**

Fig. 9A

Fig. 9B

**Fig. 10A**

**Fig. 10B**

**Fig. 10C**

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009071208 A1
- WO 2013143773 A1
- WO 2013143774 A1
- WO 2022150474 A1
- DE 102007057978 A1

**In der Beschreibung aufgeführte Nicht-Patentliteratur**

- **C.M. RANGEL et al.** Fuel Starvation: Irreversible Degradation Mechanisms in PEM Fuel Cells. *WHEC 2010, Essen, Deutschland, Session Title/No. Electrochemistry of PEM Fuel Cells/FC. 1*, 04 June 2014